# EUROPÄISCHE PATENTSCHRIFT

(11) **EP 3 708 985 B1**
(45) Veröffentlichungstag und Bekanntmachung des Hinweises auf die Patenterteilung: **20.12.2023**
(21) Anmeldenummer: 20161211.6
(22) Anmeldetag: 05.03.2020
(51) Int. Cl.: G01K 17/08, G01N 25/66, G01W 1/17

(54) **ELEKTRONISCHER HEIZKOSTENVERTEILER UND VERFAHREN ZU DESSEN BETRIEB**
ELECTRONIC HEATING COST DISTRIBUTOR AND METHOD FOR OPERATING THE SAME
RÉPARTITEUR ÉLECTRONIQUE DE FRAIS DE CHAUFFAGE ET SON PROCÉDÉ DE FONCTIONNEMENT

(30) Priorität: 11.03.2019 DE 102019106096
(43) Veröffentlichungstag der Anmeldung: 16.09.2020
(73) Patentinhaber: QUNDIS GmbH, 99098 Erfurt (DE)
(72) Erfinder: KUHN, Jens Dr.-Ing., 98693 Ilmenau (DE)
(74) Vertreter: Liedtke & Partner Patentanwälte

(56) Entgegenhaltungen:
- EP-A2- 2 341 326
- DE-A1-102008 061 087
- DE-U1-202007 007 255

## Beschreibung

Die Erfindung betrifft einen elektronischen Heizkostenverteiler nach den Merkmalen des Oberbegriffs des Anspruchs 1 und ein Verfahren zu dessen Betrieb in einer Heizkostenverteilerfunktion und/oder in einer Schimmelgefahrwarnerfunktion.

Aus dem Stand der Technik ist, wie in der EP 1 746 556 B1 beschrieben, ein elektronischer Heizkostenverteiler zur Bestimmung der von einem in einem Raum befindlichen Heizkörper abgegebenen Wärmemenge bekannt. Der Heizkostenverteiler umfasst eine Messeinrichtung zum Messen der Temperatur des Heizkörpers und eine Sendeeinrichtung zum Übertragen der Messdaten per Funk an einen zentralen Empfänger. In dem Heizkostenverteiler ist ein zusätzlicher Sensor zum Messen von raumspezifischen Umweltdaten integriert, wobei es sich bei diesen Umweltdaten nicht um Daten handelt, welche zur Bestimmung der von dem Heizkörper abgegebenen Wärmemenge benötigt und verwendet werden. Zum Senden der elektronischen Signale des Sensors werden die Sendeeinrichtung des Heizkostenverteilers und der zentrale Empfänger des Heizkostenverteilers mit verwendet. Die Signale werden in diesem zentralen Empfänger gespeichert und/oder ausgewertet und/oder angezeigt.

In der DE 10 2008 061 087 A1 werden ein Verfahren und eine Vorrichtungsanordnung zur Erfassung und Auswertung von Raumklimadaten beschrieben. Das Verfahren umfasst eine Messung einer ersten Feuchte und eine Bestimmung eines ersten Taupunkts an einem Neutralpunkt, eine Messung einer zweiten Feuchte und eine Bestimmung eines zweiten Taupunkts an einem Kaltpunkt, einen Vergleich des ersten Taupunkts mit dem zweiten Taupunkt und eine Bewertung des Raumklimas auf der Grundlage des Vergleichs der beiden Taupunkte. Die Vorrichtungsanordnung zur Durchführung dieses Verfahrens umfasst eine erste Sensoreinrichtung zur Messung einer ersten Temperatur und der ersten Feuchte am Neutralpunkt sowie eine zweite Sensoreinrichtung zur Messung einer zweiten Temperatur und der zweiten Feuchte am Kaltpunkt.

Der Erfindung liegt die Aufgabe zu Grunde, einen gegenüber dem Stand der Technik verbesserten elektronischen Heizkostenverteiler und ein gegenüber dem Stand der Technik verbessertes Verfahren zu dessen Betrieb in einer Heizkostenverteilerfunktion und/oder in einer Schimmelgefahrwarnerfunktion anzugeben.

Die Aufgabe wird erfindungsgemäß gelöst durch einen elektronischen Heizkostenverteiler mit den Merkmalen des Anspruchs 1 und ein Verfahren zu dessen Betrieb in einer Heizkostenverteilerfunktion und/oder in einer Schimmelgefahrwarnerfunktion mit den Merkmalen des Anspruchs 9.

Vorteilhafte Ausgestaltungen der Erfindung sind Gegenstand der Unteransprüche.

Ein elektronischer Heizkostenverteiler umfasst einen ersten Temperatursensor zur Erfassung einer Heizkörpertemperatur eines in einem Raum angeordneten Heizkörpers, einen zweiten Temperatursensor zur Erfassung einer Wandtemperatur einer Wand des Raums oder zumindest einer durch die Wandtemperatur erheblich beeinflussten wandnahen Raumlufttemperatur des Raums in einem vorgegebenen, insbesondere möglichst geringen, Abstand zur Wand des Raums, und einen Feuchtesensor. Mittels des Feuchtesensors ist insbesondere eine wandnahe Raumfeuchte erfassbar, wenn der elektronische Heizkostenverteiler an der Wand angeordnet ist, insbesondere montiert ist.

Erfindungsgemäß ist der erste Temperatursensor als ein Fernfühler ausgebildet, d. h. außerhalb eines Gehäuses einer Basiseinheit des elektronischen Heizkostenverteilers angeordnet und mit dieser durch eine kabellose oder kabelgebundene Sensoranbindung verbunden, und mit dem im Raum angeordneten Heizkörper thermisch koppelbar oder gekoppelt, und der zweite Temperatursensor ist derart im elektronischen Heizkostenverteiler, erfindungsgemäß in der Basiseinheit, d. h. in und/oder am Gehäuse, angeordnet und der elektronische Heizkostenverteiler, insbesondere die Basiseinheit, ist derart ausgebildet, dass der zweite Temperatursensor durch eine Anordnung des elektronischen Heizkostenverteilers, insbesondere der Basiseinheit, beispielsweise mittels einer entsprechenden Halterung, an der Wand des Raumes an der Wand oder in einem vorgegebenen Abstand zur Wand positionierbar oder positioniert ist, wodurch der zweite Temperatursensor mit der Wand oder zumindest mit der wandnahen Raumluft thermisch koppelbar bzw. gekoppelt ist. Der Feuchtesensor ist erfindungsgemäß ebenfalls ein Bestandteil der Basiseinheit, d. h. im und/oder am Gehäuse der Basiseinheit angeordnet, kann aber in nicht erfindungsgemäßen anderen Ausführungsformen beispielsweise auch als ein Fernfühler ausgebildet sein. Der Feuchtesensor ist, wenn er in der Basiseinheit angeordnet ist, vorteilhafterweise derart im elektronischen Heizkostenverteiler, insbesondere in der Basiseinheit, d. h. in oder am Gehäuse, angeordnet und der elektronische Heizkostenverteiler, insbesondere die Basiseinheit, ist derart ausgebildet, dass der Feuchtesensor durch eine Anordnung des elektronischen Heizkostenverteilers, insbesondere der Basiseinheit, beispielsweise mittels einer entsprechenden Halterung, an der Wand des Raumes vorteilhafterweise an der Wand oder in einem vorgegebenen Abstand zur Wand positionierbar oder positioniert ist, wodurch der Feuchtesensor mit der Wand oder zumindest mit der wandnahen Raumluft klimatisch, insbesondere bezüglich Feuchtigkeit, gut koppelbar bzw. gekoppelt ist. Die Sensoranbindung des ersten Temperatursensors zur Basiseinheit ist beispielsweise als eine Anschlussleitung zum Messen eines Sensorwiderstandes des ersten Temperatursensors ausgebildet, kann in anderen Ausführungsformen aber beispielsweise auch als eine digitale Busanschlussleitung oder als eine drahtlose Sensoranbindung ausgebildet sein.

Unter wandnah ist insbesondere ein Abstand zur Wand von maximal 30 mm, insbesondere von maximal 25 mm, insbesondere von maximal 20 mm, insbesondere von maximal 15 mm, bevorzugt von maximal 10 mm, besonders bevorzugt von maximal 5 mm, zu verstehen. Innerhalb dieses Abstands zur Wand ist der betreffende Sensor, insbesondere der zweiten Temperatursensor und/oder der Feuchtesensor, zweckmäßigerweise angeordnet, wenn der elektronische Heizkostenverteiler, insbesondere dessen Basiseinheit, an der Wand angeordnet ist, insbesondere montiert ist.

Unter wandnah ist alternativ oder zusätzlich insbesondere zu verstehen, dass der betreffende Sensor, insbesondere der zweite Temperatursensor und/oder der Feuchtesensor, im Heizkostenverteiler, insbesondere in dessen Basiseinheit, näher an einer der Wand zugewandten Rückseite als an einer der Rückseite gegenüberliegenden und dem Raum zugewandten Vorderseite angeordnet ist, insbesondere um ein Mehrfaches näher an der Rückseite als an der Vorderseite.

Durch diese erfindungsgemäße Ausbildung des elektronischen Heizkostenverteilers, insbesondere durch den als Fernfühler ausgebildeten ersten Temperatursensor zur Heizkörpertemperaturerfassung, den zusätzlichen Feuchtesensor, insbesondere zur Erfassung des wandnahen Luftfeuchtegehaltes, und den zweiten Temperatursensor zur Erfassung der Wandtemperatur oder der wandnahen Raumlufttemperatur in einem vorgegebenen, möglichst kleinen, Abstand zur Wand, wird mittels dieses elektronischen Heizkostenverteilers eine Schimmelgefahrermittlung und somit einer Schimmelgefahrwarnung ermöglicht. Der elektronische Heizkostenverteiler kann somit, beispielsweise alternativ oder zusätzlich zur Verwendung in seiner Heizkostenverteilerfunktion, auch als Schimmelwarner verwendet werden, d. h. in der Schimmelgefahrwarnerfunktion. Die Schimmelgefahr kann beispielsweise ermittelt werden, indem in Abhängigkeit von einer gemessenen relativen Feuchte der Taupunkt berechnet wird und festgestellt wird, ob die ermittelte aktuelle Wandtemperatur oder die ermittelte durch die Wandtemperatur erheblich beeinflusste wandnahe Raumlufttemperatur des Raums in einem vorgegebenen, insbesondere möglichst geringen, Abstand zur Wand des Raums unterhalb der Taupunkttemperatur liegt und somit die Gefahr einer Kondensation auf einer Wandoberfläche der Wand vorliegt und damit eine wichtige Voraussetzung für Schimmelbildung vorhanden ist. Die Gefahr der Schimmelbildung, insbesondere an Wänden des Raums, besteht insbesondere dann, wenn eine geringe Wandtemperatur und eine hohe Feuchtigkeit im Raum vorliegen und wenn der Raum nicht beheizt wird. Dies kann mittels des ersten und zweiten Temperatursensors und des Feuchtesensors ermittelt werden. Hierfür sind beispielsweise nur geringe Modifikationen eines herkömmlichen elektronischen Heizkostenverteilers erforderlich, um den erfindungsgemäßen elektronischen Heizkostenverteiler auszubilden.

Als zweiter Temperatursensor, welcher bei der hier beschriebenen Lösung zur Erfassung der Wandtemperatur der Wand des Raums oder zumindest der durch die Wandtemperatur erheblich beeinflussten wandnahen Raumlufttemperatur des Raums in einem vorgegebenen, insbesondere möglichst geringen, Abstand zur Wand des Raums vorgesehen ist, kann beispielsweise ein herkömmlicher Heizkörpertemperatursensor verwendet werden, welcher in einem herkömmlichen Heizkostenverteiler zur Erfassung der Heizkörpertemperatur vorgesehen wäre. Dies wird durch eine entsprechende Anordnung eines solchen Temperatursensors im elektronischen Heizkostenverteiler, d. h. in der Basiseinheit, und/oder durch eine entsprechende Anordnung der Basiseinheit an der Wand ermöglicht.

Alternativ kann als zweiter Temperatursensor, welcher bei der hier beschriebenen Lösung zur Erfassung der Wandtemperatur der Wand des Raums oder zumindest der durch die Wandtemperatur erheblich beeinflussten wandnahen Raumlufttemperatur des Raums in einem vorgegebenen, insbesondere möglichst geringen, Abstand zur Wand des Raums vorgesehen ist, auch der herkömmliche Raumlufttemperatursensor verwendet werden, welcher in einem herkömmlichen Heizkostenverteiler zur Erfassung der wandfernen Raumlufttemperatur vorgesehen wäre.

Üblicherweise ist ein solcher herkömmlicher Raumlufttemperatursensor bei einem herkömmlichen elektronischen Heizkostenverteiler derart angeordnet, dass er möglichst gut eine Gehäusetemperatur und damit die wandferne Raumlufttemperatur erfassen kann. Für einen Schimmelgefahrwarner ist jedoch die Wandtemperatur maßgeblich. Um diesen als herkömmlichen Raumtemperatursensor ausgebildeten zweiten Temperatursensor daher mit der Wand thermisch zu kontaktieren oder zumindest in den vorgegebenen, insbesondere möglichst geringen, Abstand zur Wand zu bringen, kann beispielsweise vorgesehen sein, diesen herkömmlichen Raumlufttemperatursensor innerhalb der Basiseinheit entsprechend anders zu positionieren, insbesondere derart, dass dieser herkömmliche Raumlufttemperatursensor nun einer Rückseite der Basiseinheit zugewandt ist und somit durch Anordnen der Basiseinheit mit ihrer Rückseite an der Wand mit dieser Wand oder zumindest mit der wandnahen Raumluft thermisch koppelbar ist. Dies kann beispielsweise erfolgen, indem dieser Temperatursensor auf einer der Rückseite der Basiseinheit zugewandten Rückseite einer Hauptleiterplatte der Basiseinheit angeordnet wird oder zusammen mit der Hauptleiterplatte, auf welcher er angeordnet ist, um 180°, insbesondere um die Längsachse, gedreht wird. Alternativ kann dies beispielsweise erfolgen, indem eine Sensorleiterplatte, auf welcher dieser Temperatursensor angeordnet ist, in der Basiseinheit um 180° gedreht und an der Rückseite der Hauptleiterplatte angeordnet wird oder indem diese Sensorleiterplatte zusammen mit der Hauptleiterplatte um 180°, insbesondere um die Längsachse der Hauptleiterplatte, gedreht wird, so dass nun das Ende der Sensorleiterplatte mit dem nun den zweiten Temperatursensor bildenden Temperatursensor im Bereich der Rückseite der Basiseinheit positioniert ist.

Der Feuchtesensor ist ein zusätzlicher Sensor, der in einem herkömmlichen Heizkostenverteiler zur Erfassung der Heizkörpertemperatur nicht vorgesehen ist und in dem erfindungsgemäßen Heizkostenverteiler, insbesondere in dessen Basiseinheit, zusätzlich vorhanden ist und durch eine entsprechende Anordnung im elektronischen Heizkostenverteiler, insbesondere auf der der Raumseite gegenüberliegenden Seite der Hauptleiterplatte, d. h. in der Basiseinheit, und/oder durch eine entsprechende Anordnung der Basiseinheit an der Wand zur Erfassung der Wandfeuchte der Wand des Raums oder zumindest der wandnahen Feuchte des Raums im vorgegebenen, möglichst geringen, Abstand zur Wand des Raums verwendet werden kann.

In einer möglichen Ausführungsform umfasst der elektronische Heizkostenverteiler einen dritten Temperatursensor zur Erfassung der wandfernen Raumlufttemperatur des Raums, welcher vom zweiten Temperatursensor beabstandet angeordnet ist, insbesondere derart beabstandet angeordnet ist, dass er durch die Anordnung des elektronischen Heizkostenverteilers, insbesondere der Basiseinheit, an der Wand des Raumes in einem größeren Abstand zur Wand positionierbar oder positioniert ist als der zweite Temperatursensor und somit die wandferne Raumlufttemperatur erfassen kann, d. h. eine Raumlufttemperatur von Luft, die weiter entfernt von der Wand ist als die Luft, deren wandnahe Raumlufttemperatur vom zweiten Temperatursensor erfasst werden kann. Insbesondere dadurch wird es ermöglicht, den elektronischen Heizkostenverteiler gleichzeitig für die Heizkostenverteilerfunktion und für die Schimmelgefahrwarnerfunktion zu verwenden, da sowohl die Wandtemperatur oder die wandnahe Raumlufttemperatur im vorgegebenen geringen Abstand zur Wand erfasst werden kann, welche für die Schimmelgefahrwarnerfunktion erforderlich ist, als auch die wandferne Raumlufttemperatur des Raums in größerem Abstand zur Wand, welche somit nicht oder wesentlich geringer durch die Wandtemperatur beeinflusst ist, erfasst werden kann.

Der Feuchtesensor und der zweite Temperatursensor sind insbesondere auf der der Rückseite und/oder Montageseite des elektronischen Heizkostenverteilers, insbesondere der Basiseinheit, zugewandten Seite der Hauptleiterplatte oder im Bereich dieser Seite der Hauptleiterplatte im elektronischen Heizkostenverteiler, insbesondere in der Basiseinheit, angeordnet und der elektronische Heizkostenverteiler, insbesondere die Basiseinheit, ist insbesondere derart ausgebildet, dass der Feuchtesensor und der zweite Temperatursensor durch eine Anordnung des elektronischen Heizkostenverteilers, insbesondere der Basiseinheit, an der Wand des Raumes an der Wand oder in einem vorgegebenen Abstand zur Wand positionierbar oder positioniert sind und damit klimatisch gut an die Wandverhältnisse angekoppelt sind.

Der dritte Temperatursensor ist, wenn vorhanden, insbesondere derart im elektronischen Heizkostenverteiler, insbesondere in der Basiseinheit, an der Vorderseite und/oder Raumseite oder in deren Bereich angeordnet und der elektronische Heizkostenverteiler, insbesondere die Basiseinheit, derart ausgebildet, dass der dritte Temperatursensor gut an die wandferne Raumlufttemperatur angekoppelt ist.

Der erste Temperatursensor ist, wie bereits erwähnt, als ein Fernfühler ausgebildet und, insbesondere bei einer Anordnung des Heizkostenverteilers, insbesondere der Basiseinheit, an der Wand, mit dem im Raum angeordneten Heizkörper thermisch koppelbar oder gekoppelt.

Das Gehäuse des elektronischen Heizkostenverteilers, genauer gesagt der Basiseinheit des elektronischen Heizkostenverteilers, ist vorteilhafterweise im Wesentlichen offen gegenüber der Wand des Heizkörpers. Beispielsweise ist das Gehäuse schalenförmig oder deckelförmig ausgebildet, wobei der Gehäuserand bündig auf der Wand angeordnet ist und beispielsweise dicht mit dieser abschließt. Die Hauptleiterplatte kann dabei in dem in Richtung der Wand offenen Gehäuse eingesetzt und derart angeordnet sein, dass ein zwischen der Wand und der Hauptleiterplatte gebildeter Zwischenraum vom Gehäuse umschlossen oder eingekapselt ist. Mit anderen Worten: Das Gehäuse ist zwischen Wand und Hauptleiterplatte im Wesentlichen geschlossen gegenüber dem Raum ausgebildet. Das Gehäuse kapselt somit den Zwischenraum zwischen Wand und Hauptleiterplatte gegenüber der Umgebung und damit dem Raum ab oder ummantelt diesen. Die Hauptleiterplatte dient dabei vorteilhafterweise ebenfalls zum Abschließen dieses Zwischenraums gegenüber der Umgebung und damit gegenüber dem Raum. Sie schirmt diesen Zwischenraum insbesondere nach vorn, in Richtung der Vorderseite des Gehäuses und somit in Richtung des Raums ab.

Darüber hinaus kann das Gehäuse derart ausgebildet sein, dass es mit minimaler Auflagefläche, beispielsweise nur mit dem Gehäuserand, auf der Wand aufliegt. Hierdurch ist ein auf der Hauptleiterplatte in Richtung der Wand ausgerichteter und im Zwischenraum angeordneter Sensor oder ein auf der Sensorleiterplatte und im Zwischenraum angeordneter Sensor, wie ein Feuchte- oder Temperatursensor, insbesondere der zweite Temperatursensor und/oder der Feuchtesensor, thermisch mit der Wand koppelbar, insbesondere direkt oder indirekt über Luftaustausch mit der Wand thermisch koppelbar. Durch die im Wesentlichen gegenüber dem Raum geschlossene Ausbildung des Gehäuses zwischen Wand und Hauptleiterplatte kann die natürliche Konvektion an der Wand nicht durch das Volumen unterhalb der Hauptleiterplatte erfolgen oder ist zumindest sehr stark eingeschränkt.

Beispielsweise ist eine Rückseite des Gehäuses, welche die Montageseite des elektronischen Heizkostenverteilers, insbesondere der Basiseinheit, bildet, entsprechend offen gegen die Wand und optional geschlossen gegenüber dem Raum unterhalb der Hauptleiterplatte ausgebildet. Die minimale Auflagefläche ist derart bemessen, dass der elektronische Heizkostenverteiler, insbesondere die Basiseinheit, an der Wand montierbar ist, beispielsweise mittels einer Wandhalterung, und derart offen ist, dass eine gute klimatische und/oder thermische Kopplung des zweiten Temperatursensors und des Feuchtesensors an die Wand ermöglicht ist. Eine minimale Auflagefläche auf der Wand ist vor allem wichtig, um eine Schimmelbildung auf einer feuchten Wand zwischen Wand und Auflagefläche zu vermeiden. Für eine hinreichende Durchlüftung kann das Gehäuse auf der Deckseite und damit auf der von der Wand abgewandten Seite, d. h. insbesondere auf der dem Raum zugewandten Seite, Öffnungen zum Belüften aufweisen.

Der elektronische Heizkostenverteiler kann des Weiteren alternativ oder zusätzlich zur Verwendung in seiner Heizkostenverteilerfunktion und/oder Schimmelgefahrwarnerfunktion auch in einer Raumtemperaturüberwachungsfunktion eingesetzt werden, um insbesondere einen zeitlichen Verlauf der wandfernen Raumlufttemperatur mittels des dritten Temperatursensors zu überwachen und gegebenenfalls mittels einer Warneinheit eine Unterschreitung einer vorgebbaren minimalen Raumlufttemperatur oder eine Überschreitung einer vorgebaren maximalen Raumlufttemperatur zu signalisieren. Hierzu sind im Allgemeinen nur geringe Modifikationen eines herkömmlichen Heizkostenverteilers notwendig.

Des Weiteren kann aus dem Vergleich der Heizkörpertemperatur, der wandfernen Raumlufttemperatur und der Wandtemperatur der Wand des Raums oder zumindest der durch die Wandtemperatur erheblich beeinflussten wandnahen Raumlufttemperatur des Raums im vorgegebenen, insbesondere möglichst geringen, Abstand zur Wand des Raums abgeleitet werden, ob die Heiztemperatur und -dauer dazu geeignet sind, eine Raumlufttemperatur zu liefern, die einen vorgebbaren Schwellwert zu erreichen geeignet ist bzw. die Raumlufttemperatur so zu erhöhen, dass diese Wandtemperatur in Folge der erhöhten Raumlufttemperatur so ansteigen kann, dass der Feuchtegehalt der wandnahen Raumluft so verringert wird, dass die Schimmelbildungsgefahr verhindert oder vermindert wird.

Der zweite Temperatursensor, welcher bei der hier beschriebenen Lösung zur Erfassung einer Wandtemperatur einer Wand des Raums oder zumindest einer durch die Wandtemperatur erheblich beeinflussten wandnahen Raumlufttemperatur des Raums in einem vorgegebenen, insbesondere möglichst geringen, Abstand zur Wand des Raums vorgesehen ist, ist in einer möglichen Ausführungsform als ein im elektronischen Heizkostenverteiler, d. h. in der Basiseinheit, integrierter Heizkörpertemperatursensor ausgebildet, welcher zur Erfassung der Heizkörpertemperatur bei am Heizkörper angeordnetem Heizkostenverteiler und nicht verwendetem ersten Temperatursensor vorgesehen ist. Ein solcher integrierter Heizkörpertemperatursensor wird bei einem herkömmlichen elektronischen Heizkostenverteiler bei Verwendung eines als Fernfühler ausgebildeten Heizkörpertemperatursensors deaktiviert. Dies wird bei der hier beschriebenen Lösung jedoch nicht gemacht, d. h. dieser interne Heizkörpertemperatursensor wird, obwohl zusätzlich der Fernfühler vorhanden ist, nicht deaktiviert, sondern er wird nun als zweiter Temperatursensor zur Erfassung der Wandtemperatur oder zumindest der durch die Wandtemperatur erheblich beeinflussten wandnahen Raumlufttemperatur des Raums im vorgegebenen, insbesondere möglichst geringen, Abstand zur Wand des Raums verwendet. Dadurch kann die Basiseinheit auf gleiche oder ähnliche Weise an der Wand angeordnet werden, wie sie als elektronischer Heizkostenverteiler ohne Fernfühler am Heizkörper angeordnet werden würde, beispielsweise mit einer entsprechenden Montageplatte, und nun mittels des zweiten Temperatursensors die Wandtemperatur der Wand des Raums oder zumindest die durch die Wandtemperatur erheblich beeinflusste wandnahe Raumlufttemperatur des Raums im vorgegebenen, insbesondere möglichst geringen, Abstand zur Wand des Raums erfassen. Es ist somit nur eine sehr geringe Modifikation eines herkömmlichen elektronischen Heizkostenverteilers erforderlich, um dies und somit die Schimmelgefahrwarnerfunktion und, insbesondere auch gleichzeitig, weiterhin die Heizkostenverteilerfunktion zu ermöglichen. Hierfür sind insbesondere der zusätzliche Feuchtesensor und der als Fernfühler ausgebildete erste Temperatursensor zur Erfassung der Heizkörpertemperatur erforderlich. Des Weiteren ist beispielsweise eine entsprechend angepasste Auswertung von Sensorergebnissen der Sensoren des Heizkostenverteilers erforderlich.

In einer möglichen Ausführungsform ist der zweite Temperatursensor auf einer Sensorleiterplatte angeordnet, die in einem vorgegebenen Winkel, insbesondere senkrecht, zur Hauptleiterplatte angeordnet und mit der Hauptleiterplatte verbunden ist. Dadurch wird eine noch wandnähere Anordnung des zweiten Temperatursensors erreicht. Dies kann beispielsweise durch einen Umbau eines herkömmlichen Heizkostenverteilers erreicht werden, wobei alternativ zur vorher beschriebenen Variante und wie weiter oben bereits erläutert, als zweiter Temperatursensor ein herkömmlicher Raumlufttemperatursensor verwendet wird, welcher bei einem herkömmlichen elektronischen Heizkostenverteiler zur Erfassung der Raumlufttemperatur verwendet werden würde und hierzu an einem Ende der Sensorleiterplatte im Bereich einer Vorderseite der Basiseinheit angeordnet wäre. Beispielsweise kann nun diese Sensorleiterplatte in der Basiseinheit um 180° gedreht und an einer Rückseite der Hauptleiterplatte angeordnet werden oder zusammen mit der Hauptleiterplatte, insbesondere um deren Längsachse, um 180° gedreht werden, so dass nun das Ende der Sensorleiterplatte mit dem nun den zweiten Temperatursensor bildenden bisherigen Raumlufttemperatursensor im Bereich der Rückseite der Basiseinheit positioniert ist. Die Basiseinheit kann nun mit der Rückseite an der Wand angeordnet werden, wie sie bei herkömmlicher Vorgehensweise an einem Heizkörper angeordnet werden würde, beispielsweise mittels einer entsprechenden Montageplatte. Dadurch ist nun dieser zweite Temperatursensor mit der Wand oder zumindest mit der wandnahen Raumluft thermisch gekoppelt.

Vorteilhafterweise ist auch der Feuchtesensor, zusammen mit dem zweiten Temperatursensor, auf der Sensorleiterplatte angeordnet, um dadurch auch für den Feuchtesensor eine besonders wandnahe Anordnung zu erreichen.

Ist der dritte Temperatursensor vorgesehen, so können sowohl der zweite Temperatursensor als auch der dritte Temperatursensor auf der Sensorleiterplatte angeordnet sein, wobei dann der dritte Temperatursensor vom zweiten Temperatursensor beabstandet angeordnet ist, insbesondere derart beabstandet angeordnet ist, dass er durch die Anordnung des elektronischen Heizkostenverteilers, insbesondere der Basiseinheit, an der Wand des Raumes in einem größeren Abstand zur Wand positionierbar oder positioniert ist als der zweite Temperatursensor. Der zweite Temperatursensor ist dann insbesondere im Bereich der Rückseite der Basiseinheit angeordnet, welche an der Wand anordbar oder angeordnet ist, und der dritte Temperatursensor ist dann insbesondere im Bereich der Vorderseite der Basiseinheit angeordnet, welche dem Inneren des Raums zugewandt ist, um eine von der Wandtemperatur nicht oder nur gering beeinflusste Raumtemperatur zu ermitteln, welche für die Heizkostenverteilerfunktion erforderlich ist. Alternativ kann beispielsweise auch nur der dritte Temperatursensor auf die beschriebene Weise auf der Sensorleiterplatte angeordnet sein. Alternativ können für den zweiten Temperatursensor und den dritten Temperatursensor jeweils eine eigene Sensorleiterplatte vorgesehen sein, welche dann jeweils entsprechend angeordnet und ausgerichtet sind wie oben am Beispiel der gemeinsamen Sensorleiterplatte beschrieben.

Alternativ kann der jeweilige Temperatursensor und/oder der Feuchtesensor beispielsweise auch auf der Hauptleiterplatte angeordnet sein. Dann ist der Feuchtesensor und/oder der zweite Temperatursensor auf der Seite der Hauptleiterplatte angeordnet, welche bei einer Montage des Heizkostenverteilers, insbesondere der Basiseinheit, an der Wand dieser Wand zugewandt ist. Der dritte Temperatursensor ist dann an der Seite der Hauptleiterplatte angeordnet, welche bei einer Montage des Heizkostenverteilers, insbesondere der Basiseinheit, an der Wand von dieser Wand abgewandt ist. Um einen besseren thermischen Kontakt dieses dritten Temperatursensors zur wandfernen Raumluft zu erreichen, können im Gehäuse der Basiseinheit eine oder mehrere Gehäuseöffnungen vorgesehen sein.

Vorteilhafterweise umfasst der elektronische Heizkostenverteiler eine Auswerteeinheit, welche insbesondere in der Basiseinheit, insbesondere in deren Gehäuse, angeordnet ist. Dadurch wird es ermöglicht, die Auswertung von den Sensoren erfasster Sensorwerte im elektronischen Heizkostenverteiler, insbesondere in der Basiseinheit, durchzuführen, so dass der elektronische Heizkostenverteiler selbst eine Höhe der Schimmelgefahr und/oder eine vom Heizkörper abgegebene Wärmemenge bzw. einen Äquivalenzwert für die vom Heizkörper abgegebene Wärmemenge und/oder eine Unterschreitung und/oder Überschreitung einer vorgegebenen wandfernen Raumlufttemperatur ermitteln kann. Der elektronische Heizkostenverteiler, insbesondere die Auswerteeinheit, ist entsprechend ausgebildet und eingerichtet, um dies durchzuführen. Eine Übertragung dieser Sensorwerte an eine externe Auswerteeinheit und entsprechend eine externe Auswertung ist somit nicht erforderlich.

Vorteilhafterweise umfasst der elektronische Heizkostenverteiler, insbesondere dessen Basiseinheit, eine Warneinheit. Dadurch wird eine Ausgabe einer Warnmeldung, beispielsweise einer optischen und/oder akustischen Warnmeldung, ermöglicht, wenn eine hohe Schimmelgefahr besteht, d. h. wenn die ermittelte Höhe der Schimmelgefahr einen vorgegebenen Grenzwert überschreitet und/oder wenn die vorgegebene minimale wandferne Raumlufttemperatur unterschritten oder wenn die vorgegebene maximale wandferne Raumtemperatur überschritten wurde.

Vorteilhafterweise umfasst der elektronische Heizkostenverteiler, insbesondere dessen Basiseinheit, eine Kommunikationseinheit zur Kommunikation mit mindestens einer heizkostenverteilerexternen Einheit, beispielsweise mit einer Ausleseeinheit und/oder mit einer heizkostenverteilerexternen Auswerteeinheit und/oder mit einer heizkostenverteilerexternen Warneinheit, beispielsweise einem Mobiltelefon, auf welchem ebenfalls die Warnmeldung und/oder andere Informationen ausgegeben werden können. Dadurch wird eine Auslesung, vorteilhafterweise eine Fernauslesung, des elektronischen Heizkostenverteilers ermöglicht, so dass beispielsweise die ermittelte Höhe der Schimmelgefahr und/oder die ermittelte vom Heizkörper abgegebene Wärmemenge bzw. der ermittelte Äquivalenzwert für die vom Heizkörper abgegebene Wärmemenge und/oder das Raumlufttemperaturprofil ausgelesen werden können. Die Kommunikationseinheit kann beispielsweise eine Infrarotschnittstelle und/oder eine Funkschnittstelle umfassen.

Die Ausleseeinheit ist beispielsweise insbesondere vom elektronischen Heizkostenverteiler, insbesondere von der Basiseinheit, entfernt angeordnet, insbesondere außerhalb des Raums und beispielsweise auch außerhalb eines Gebäudes, zu welchem der Raum gehört. Beispielsweise ist die Ausleseeinheit Bestandteil einer zentralen Datenerfassung eines Wärmeversorgers oder eines Auslesedienstleisters. Die Ausleseeinheit kann beispielsweise auch durch eine Hausverwaltung betrieben werden oder die Hausverwaltung hat eine Kommunikationsverbindung zur Ausleseeinheit oder wird über Ausleseergebnisse informiert.

Es kann beispielsweise auch vorgesehen sein, dass zusätzlich auch die vom ersten Temperatursensor erfasste Heizkörpertemperatur an diese Ausleseeinheit übertragen wird, insbesondere auch im Zeitverlauf mehrfach übertragen wird, insbesondere nach einer ermittelten Schimmelgefahr, d. h. wenn die Höhe der Schimmelgefahr den vorgegebenen Grenzwert überschritten hat, und nach einer erfolgten entsprechenden Warnmeldung im Zeitverlauf mehrfach übertragen wird. Dadurch kann extern, d. h. beispielsweise von der Hausverwaltung, überprüft werden, ob und wie auf die Warnmeldung bezüglich der Schimmelgefahr reagiert wird, insbesondere ob der Heizkörper aktiviert wird und somit der Raum ausreichend beheizt wird, um die Schimmelgefahr zu reduzieren.

Auch die von den anderen Temperatursensoren erfassten Temperaturwerte und/oder der vom Feuchtesensor erfasste Feuchtemesswert können auf diese Weise übertragen und ausgewertet werden.

In einer möglichen Ausführungsform sind der zweite Temperatursensor und der Feuchtesensor als eine gemeinsame Sensoreinheit ausgebildet. Beispielsweise ist der zweite Temperatursensor im Feuchtesensor integriert und somit als ein im Feuchtesensor integrierter Temperatursensor ausgebildet.

In einem erfindungsgemäßen Verfahren zum Betrieb eines solchen elektronischen Heizkostenverteilers kann der elektronische Heizkostenverteiler in einer Heizkostenverteilerfunktion und/oder in einer Schimmelgefahrwarnerfunktion betrieben werden.

Zum Betrieb des elektronischen Heizostenverteilers ausschließlich in der Heizkostenverteilerfunktion wird zweckmäßigerweise mittels des mit dem Heizkörper thermisch gekoppelten ersten Temperatursensors die Heizkörpertemperatur des Heizkörpers erfasst. Die Basiseinheit ist dabei beispielsweise an der Wand angeordnet.

Da zum Betrieb des Heizkostenverteilers ausschließlich in der Heizkostenverteilerfunktion die Wandtemperatur oder die wandnahe Raumlufttemperatur nicht benötigt wird, besteht jedoch alternativ auch die Möglichkeit, die Basiseinheit nicht an der Wand, sondern auf herkömmliche Weise am Heizkörper anzuordnen, so dass der als Fernfühler ausgebildete erste Temperatursensor dann nicht erforderlich ist. Somit kann dann bei dieser Anordnung der Basiseinheit am Heizkörper wieder der zweite Temperatursensor, welcher der Rückseite des Gehäuses der Basiseinheit zugewandt ist und eigentlich zur Erfassung der Wandtemperatur oder der wandnahen Raumlufttemperatur vorgesehen ist, zur Erfassung der Heizkörpertemperatur des Heizkörpers verwendet werden.

Mittels zumindest der erfassten Heizkörpertemperatur wird die vom Heizkörper abgegebene Wärmemenge oder der Äquivalenzwert für die vom Heizkörper abgegebene Wärmemenge ermittelt. Der elektronische Heizkostenverteiler ist somit in einer ursprünglich vorgesehenen Funktion verwendbar.

Zum Betrieb des elektronischen Heizostenverteilers ausschließlich in der Schimmelgefahrwarnerfunktion wird mittels des mit dem Heizkörper thermisch gekoppelten ersten Temperatursensor die Heizkörpertemperatur des Heizkörpers erfasst, mittels des mit der Wand oder zumindest mit der wandnahen Raumluft thermisch gekoppelten zweiten Temperatursensors wird die Wandtemperatur der Wand des Raums oder zumindest die wandnahe Raumlufttemperatur des Raums im vorgegebenen, insbesondere möglichst geringen, Abstand zur Wand des Raums erfasst, mittels des Feuchtesensors wird eine Feuchtigkeit, insbesondere eine Luftfeuchtigkeit in dem Raum, erfasst und mittels der erfassten Heizkörpertemperatur, der erfassten Wandtemperatur oder wandnahen Raumlufttemperatur im vorgegebenen Abstand zur Wand des Raums und der erfassten Feuchtigkeit wird die Höhe der Schimmelgefahr ermittelt.

Der elektronische Heizkostenverteiler ist somit alternativ zur Heizkostenverteilerfunktion als Schimmelgefahrwarner verwendbar. Er wird hierfür derart installiert, dass der erste Temperatursensor mit dem Heizkörper thermisch gekoppelt ist und der zweite Temperatursensor mit der Wand thermisch gekoppelt ist oder zumindest im vorgegebenen, möglichst geringen, Abstand zur Wand positioniert ist. Diese Schimmelgefahrwarnerfunktion umfasst vorteilhafterweise den Vergleich der Heizkörpertemperatur, der Wandtemperatur und vorteilhafterweise zusätzlich der Raumlufttemperatur, wofür vorteilhafterweise zusätzlich die Raumlufttemperatur mittels des dritten Temperatursensors erfasst wird und ebenfalls bei der Ermittlung der Höhe der Schimmelgefahr berücksichtigt wird. Die Schimmelgefahrwarnerfunktion umfasst dann vorteilhafterweise auch die daraus abgeleitete Bewertung, ob die Heizkörpertemperatur und eine Heizdauer dazu geeignet sind, eine wandferne und somit auch wandnahe Raumlufttemperatur zu liefern, die einen vorgebbaren Schwellwert zu erreichen geeignet ist bzw. die wandferne und somit auch die wandnahe Raumlufttemperatur so zu erhöhen, dass die Wandtemperatur in Folge dieser erhöhten Raumlufttemperatur so ansteigen kann, dass der Feuchtegehalt der wandnahen Raumluft so verringert wird, dass die Schimmelbildungsgefahr verhindert oder vermindert wird.

Zum Betrieb des elektronischen Heizostenverteilers in der Heizkostenverteilerfunktion und in der Schimmelgefahrwarnerfunktion wird mittels des mit dem Heizkörper thermisch gekoppelten ersten Temperatursensors die Heizkörpertemperatur des Heizkörpers erfasst, mittels des mit der Wand oder zumindest mit der wandnahen Raumluft thermisch gekoppelten zweiten Temperatursensors wird die Wandtemperatur der Wand des Raums oder zumindest die wandnahe Raumlufttemperatur des Raums im vorgegebenen, insbesondere möglichst geringen, Abstand zur Wand des Raums erfasst und mittels des Feuchtesensors wird die Feuchtigkeit, insbesondere die Luftfeuchtigkeit in dem Raum, erfasst. Mittels zumindest der erfassten Heizkörpertemperatur wird die vom Heizkörper abgegebene Wärmemenge oder der Äquivalenzwert für die vom Heizkörper abgegebene Wärmemenge ermittelt. Mittels der erfassten Heizkörpertemperatur, der mittels des zweiten Temperatursensors erfassten Wandtemperatur oder wandnahen Raumlufttemperatur im vorgegebenen Abstand zur Wand des Raums und der erfassten Feuchtigkeit wird die Höhe der Schimmelgefahr ermittelt. Der elektronische Heizkostenverteiler ist somit, insbesondere gleichzeitig, in der Heizkostenverteilerfunktion und in der Schimmelgefahrwarnerfunktion verwendbar. Er wird hierfür derart installiert, dass der erste Temperatursensor mit dem Heizkörper thermisch gekoppelt ist und der zweite Temperatursensor mit der Wand thermisch gekoppelt ist oder zumindest im vorgegebenen, möglichst geringen, Abstand zur Wand positioniert ist.

Wird nur die Heizkörpertemperatur zur Ermittlung der vom Heizkörper abgegebene Wärmemenge oder des Äquivalenzwertes für die vom Heizkörper abgegebene Wärmemenge verwendet, so arbeitet der elektronische Heizkostenverteiler in der Heizkostenverteilerfunktion als "Ein-Sensor-Gerät". Der Heizkostenverteiler kann jedoch auch den dritten Temperatursensor zur Erfassung der wandfernen Raumlufttemperatur des Raums aufweisen, welcher vom zweiten Temperatursensor auf die oben beschriebene Weise beabstandet angeordnet ist. Dann kann vorgesehen sein, dass zum Betrieb des elektronischen Heizkostenverteilers ausschließlich in der Heizkostenverteilerfunktion und/oder zum Betrieb des elektronischen Heizostenverteilers in der Heizkostenverteilerfunktion und in der Schimmelgefahrwarnerfunktion zusätzlich mittels des mit der wandfernen Raumluft thermisch gekoppelten dritten Temperatursensors die wandferne Raumlufttemperatur des Raums erfasst wird, insbesondere in einem größeren Abstand zur Wand des Raums als durch den zweiten Temperatursensor, und dann vorteilhafterweise mittels der erfassten Heizkörpertemperatur und der erfassten wandfernen Raumlufttemperatur die vom Heizkörper abgegebene Wärmemenge oder der Äquivalenzwert für die vom Heizkörper abgegebene Wärmemenge ermittelt wird. Der elektronische Heizkostenverteiler arbeitet dann in der Heizkostenverteilerfunktion als "Zwei-Sensor-Gerät".

Zum Betrieb des elektronischen Heizostenverteilers in der Heizkostenverteilerfunktion und in der Schimmelgefahrwarnerfunktion wird der elektronische Heizkostenverteiler dann derart installiert, dass der erste Temperatursensor mit dem Heizkörper thermisch gekoppelt ist, der zweite Temperatursensor mit der Wand thermisch gekoppelt ist oder zumindest im vorgegebenen, möglichst geringen, Abstand zur Wand positioniert ist und der dritte Temperatursensor in einem größeren Abstand zur Wand positioniert ist als der zweite Temperatursensor.

Alternativ oder zusätzlich kann beispielsweise vorgesehen sein, dass ein zeitliches Raumtemperaturprofil ermittelt wird, indem mittels des dritten Temperatursensors die wandferne Raumlufttemperatur des Raums im Zeitverlauf erfasst wird.

Alternativ oder zusätzlich ist der elektronische Heizkostenverteiler auch in einer einfacheren Schimmelgefahrwarnerfunktion verwendbar. Zu diesem Betrieb des elektronischen Heizkostenverteilers wird mittels des mit der Wand oder zumindest mit der wandnahen Raumluft thermisch gekoppelten zweiten Temperatursensors die Wandtemperatur der Wand des Raums oder zumindest die wandnahe Raumlufttemperatur des Raums im vorgegebenen, insbesondere möglichst geringen, Abstand zur Wand des Raums erfasst, mittels des Feuchtesensors wird die Feuchtigkeit, insbesondere die Luftfeuchtigkeit in dem Raum, erfasst und mittels der erfassten Wandtemperatur oder wandnahen Raumlufttemperatur im vorgegebenen Abstand zur Wand des Raums und der erfassten Feuchtigkeit wird die Höhe der Schimmelgefahr ermittelt. Der elektronische Heizkostenverteiler ist somit auch als einfacher Schimmelgefahrwarner verwendbar.

Durch die Verknüpfung der Daten mehrerer oder aller Funktionen können weitere Informationen oder Warnungen insbesondere für eine erweitere Schimmelgefahrwarnfunktion abgeleitet werden, zum Beispiel ob die Heizkörpertemperatur ausreichend hoch bzw. die Heizzeit ausreichend lang bemessen ist, um die Raumlufttemperatur so zu erhöhen, dass sich die Wandtemperatur erhöhen und eine potentielle Schimmelgefahr abgewendet werden kann.

Die vom Heizkörper abgegebene Wärmemenge bzw. der Äquivalenzwert für die vom Heizkörper abgegebene Wärmemenge und/oder die Höhe der Schimmelgefahr und/oder das zeitliche Raumtemperaturprofil werden/wird insbesondere mittels der, insbesondere in der Basiseinheit, d. h. in deren Gehäuse, angeordneten, Auswerteeinheit des elektronischen Heizkostenverteilers ermittelt. Der elektronische Heizkostenverteiler, insbesondere dessen Auswerteeinheit, ist hierfür entsprechend ausgebildet und eingerichtet. Eine externe Auswertung ist somit nicht erforderlich, wie oben bereits beschrieben. Sie ist jedoch mittels der Kommunikationseinheit und möglicher heizkostenverteilerexterner Auswerte- und Warneinheiten möglich und sinnvoll, um beispielsweise einen Bewohner einer Wohnung auf verschiedenen Wegen mit relevanten Informationen, insbesondere Warnungen, zu versorgen und auch beispielsweise einer Wohnungsverwaltung relevante Informationen übermitteln zu können.

Vorteilhafterweise wird, insbesondere durch die Auswerteeinheit, eine Warnmeldung generiert, wenn die ermittelte Höhe der Schimmelgefahr einen vorgegebenen Grenzwert überschreitet. Dadurch kann sofort ein Hinweis bezüglich der bestehenden Schimmelgefahr erfolgen.

Vorteilhafterweise wird, insbesondere durch die Auswerteeinheit, eine Warnmeldung generiert, wenn das zeitliche Raumtemperaturprofil einen vorgegebenen Grenzwert unterschreitet oder überschreitet.

Beispielsweise wird die generierte Warnmeldung oder die jeweilige generierte Warnmeldung durch die Warneinheit ausgegeben und/oder mittels der Kommunikationseinheit an die Ausleseeinheit übertragen. Dadurch können im Raum anwesende Personen mittels der Warneinheit auf die Schimmelgefahr bzw. auf die Temperaturunterschreitung oder Temperaturüberschreitung hingewiesen werden und/oder es können externe Verantwortliche, beispielsweise eine Hausverwaltung, durch die übertragene Warnmeldung auf die Schimmelgefahr bzw. auf die Temperaturunterschreitung oder Temperaturüberschreitung hingewiesen werden.

In einer möglichen Ausführungsform des Verfahrens wird die erfasste Heizkörpertemperatur mittels der Kommunikationseinheit an die mindestens eine heizkostenverteilerexterne Einheit, insbesondere an die Ausleseeinheit, übertragen, insbesondere auch im Zeitverlauf mehrfach übertragen, insbesondere nach einer ermittelten Schimmelgefahr, d. h. wenn die Höhe der Schimmelgefahr den vorgegebenen Grenzwert überschritten hat, und nach einer erfolgten entsprechenden Warnmeldung im Zeitverlauf mehrfach übertragen. Dadurch kann extern, d. h. beispielsweise von der Hausverwaltung, überprüft werden, ob und wie auf die Warnmeldung bezüglich der Schimmelgefahr reagiert wird, insbesondere ob der Heizkörper aktiviert wird und somit der Raum ausreichend beheizt wird, um die Schimmelgefahr zu reduzieren. Alternativ oder zusätzlich können auch die erfasste wandferne Raumlufttemperatur des Raums und/oder die erfasste Wandtemperatur der Wand des Raums oder zumindest die wandnahe Raumlufttemperatur des Raums im vorgegebenen Abstand zur Wand des Raums und/oder das erfasste zeitliche Raumtemperaturprofil und/oder der erfasste Feuchtemesswert mittels der Kommunikationseinheit an die mindestens eine heizkostenverteilerexterne Einheit, beispielsweise an die Ausleseeinheit, übertragen werden.

Beispielsweise kann, alternativ oder zusätzlich zur Ausgabe der Warnmeldung über die Warneinheit des elektronischen Heizkostenverteilers, auch vorgesehen sein, die Warnmeldung, entweder direkt oder über die Ausleseeinheit, an mindestens eine heizkostenverteilerexterne weitere Warneinheit zu übermitteln, beispielsweise an eine Warneinheit in dem Raum und/oder an ein Mobiltelefon oder ein anderes Gerät, beispielsweise eines Nutzers, Eigentümers oder Mieters des Raums, und/oder beispielsweise an eine Heizungssteuerung zu übermitteln, ebenfalls direkt oder über die Ausleseeinheit, wobei die Heizungssteuerung den Heizkörper und/oder eine Heizung, d. h. insbesondere einen Heizkessel, aufgrund der Warnmeldung aktiviert. In diesen Fällen kann die Warneinheit am elektronischen Heizkostenverteiler entfallen, oder sie kann weiterhin vorgesehen sein, um auch direkt am elektronischen Heizkostenverteiler die Warnmeldung auszugeben.

Der zweite Temperatursensor und/oder der dritte Temperatursensor und/oder der Feuchtesensor können jeweils in der Basiseinheit des elektronischen Heizkostenverteilers integriert sein, insbesondere in und/oder an deren Gehäuse angeordnet sein, oder als Fernfühler ausgebildet sein d. h. außerhalb des Gehäuses der Basiseinheit des elektronischen Heizkostenverteilers angeordnet und mit der Basiseinheit durch eine oder jeweils eine kabellose oder kabelgebundene Sensoranbindung verbunden sein.

Der zweite Temperatursensor ist, wenn er in der Basiseinheit integriert ist, insbesondere im Bereich einer Seite des Gehäuses der Basiseinheit angeordnet, welche der Wand des Raums zugewandt ist, wenn die Basiseinheit an der Wand angeordnet ist.

Der dritte Temperatursensor, wenn er vorhanden und in der Basiseinheit integriert ist, ist insbesondere im Bereich einer Seite des Gehäuses der Basiseinheit angeordnet, welche von der Wand des Raums abgewandt ist, wenn die Basiseinheit an der Wand angeordnet ist, und somit dem Inneren des Raums zugewandt ist.

Ausführungsbeispiele der Erfindung werden im Folgenden anhand von Zeichnungen näher erläutert.

Darin zeigen:

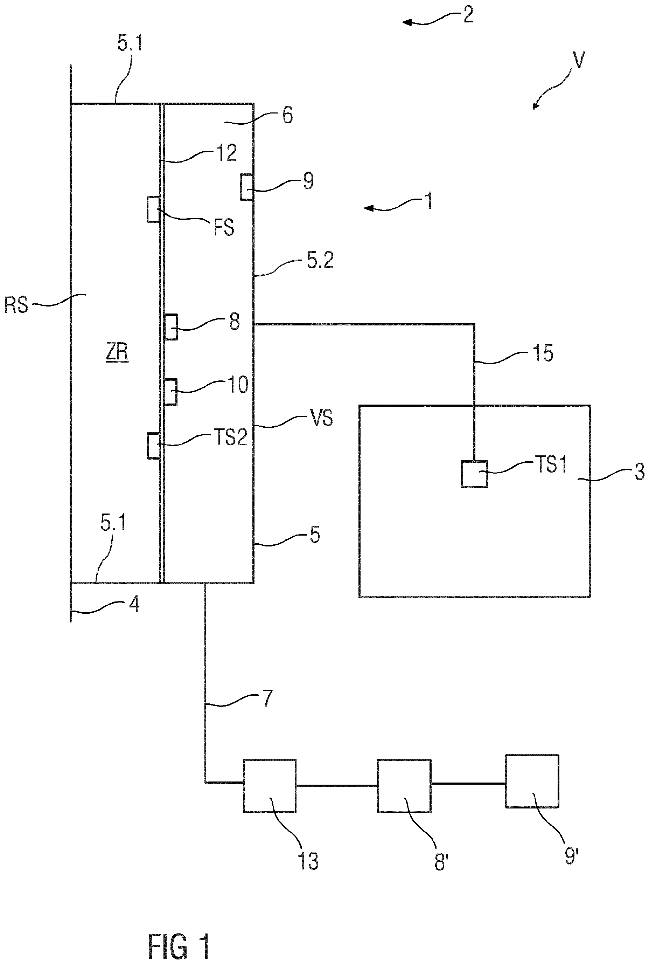

- Figur 1: schematisch eine Ausführungsform eines elektronischen Heizkostenverteilers, umfassend eine an einer Wand eines Raumes angeordnete Basiseinheit und einen als Fernfühler ausgebildeten ersten Temperatursensor zur Erfassung einer Heizkörpertemperatur eines in dem Raum angeordneten Heizkörpers,

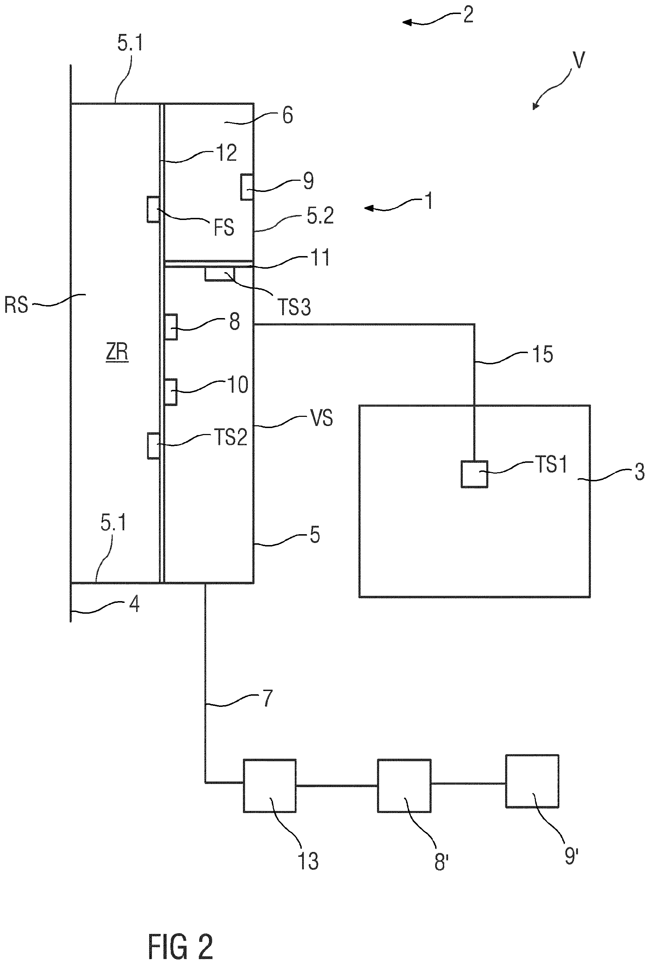

- Figur 2: schematisch eine weitere Ausführungsform eines elektronischen Heizkostenverteilers, umfassend eine an einer Wand eines Raumes angeordnete Basiseinheit und einen als Fernfühler ausgebildeten ersten Temperatursensor zur Erfassung einer Heizkörpertemperatur eines in dem Raum angeordneten Heizkörpers,

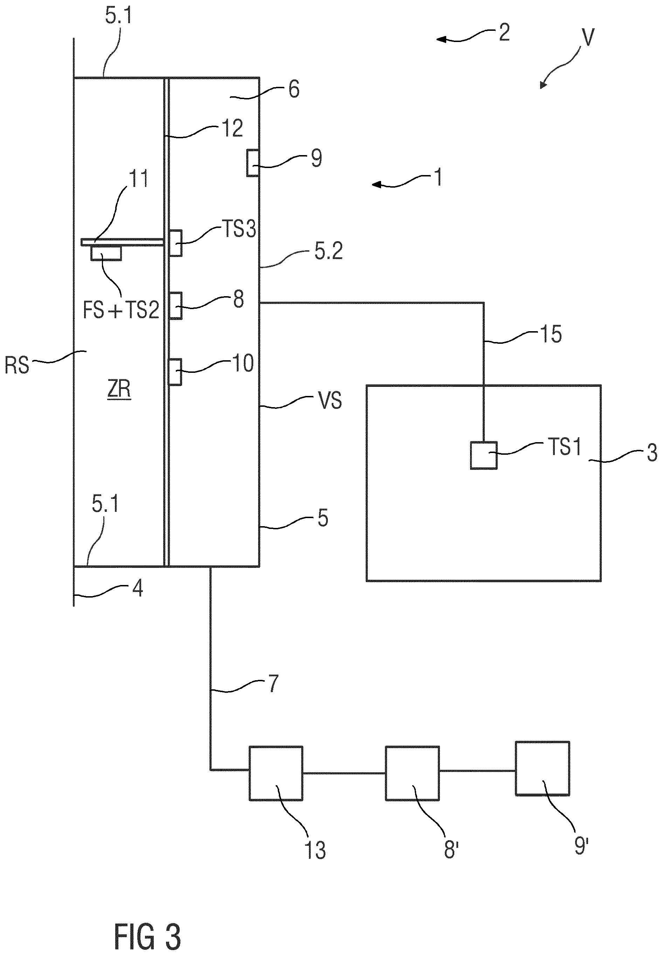

- Figur 3: schematisch eine weitere Ausführungsform eines elektronischen Heizkostenverteilers, umfassend eine an einer Wand eines Raumes angeordnete Basiseinheit und einen als Fernfühler ausgebildeten ersten Temperatursensor zur Erfassung einer Heizkörpertemperatur eines in dem Raum angeordneten Heizkörpers,

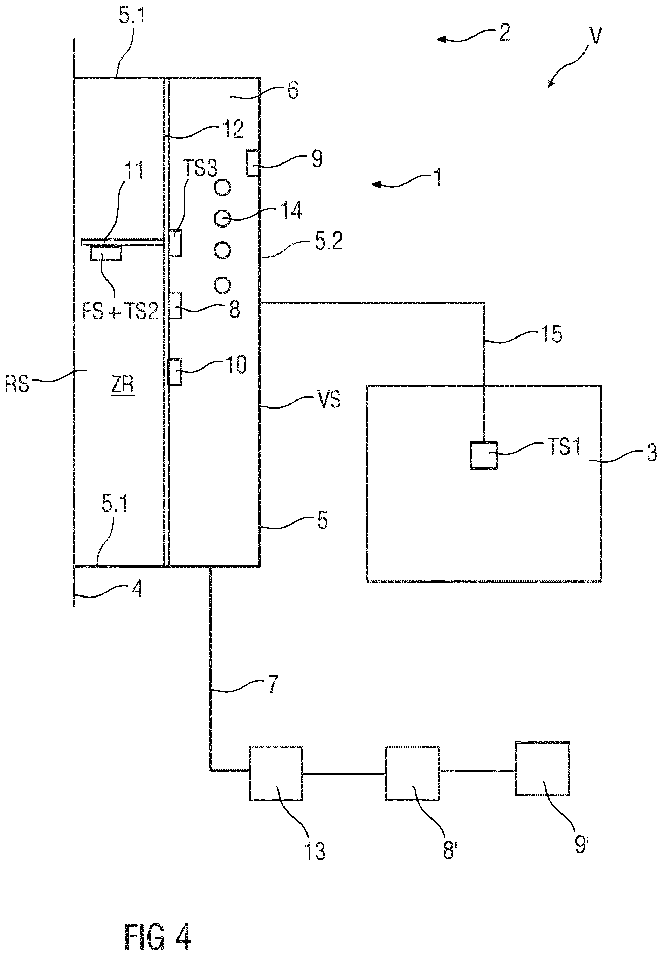

- Figur 4: schematisch eine weitere Ausführungsform eines elektronischen Heizkostenverteilers, umfassend eine an einer Wand eines Raumes angeordnete Basiseinheit und einen als Fernfühler ausgebildeten ersten Temperatursensor zur Erfassung einer Heizkörpertemperatur eines in dem Raum angeordneten Heizkörpers,

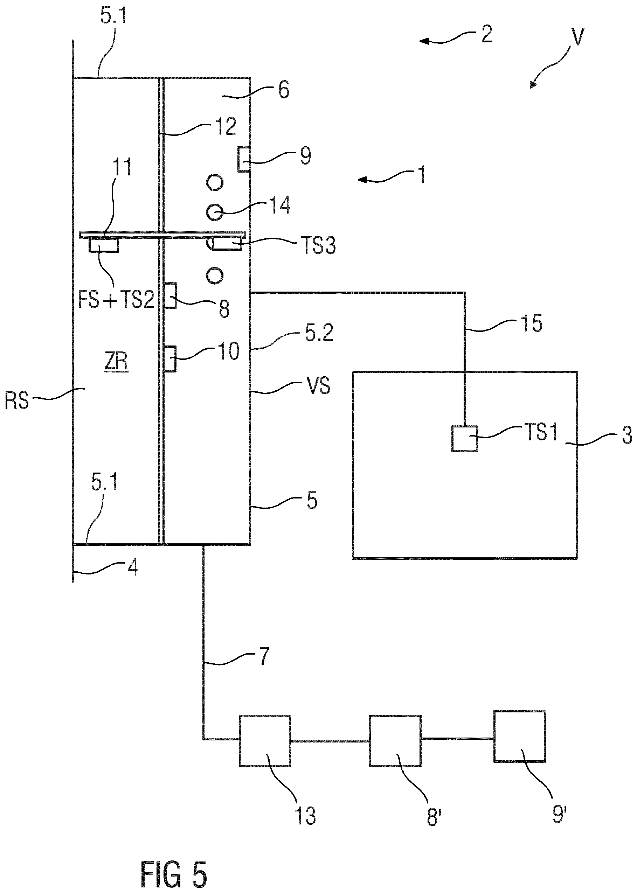

- Figur 5: schematisch eine weitere Ausführungsform eines elektronischen Heizkostenverteilers, umfassend eine an einer Wand eines Raumes angeordnete Basiseinheit und einen als Fernfühler ausgebildeten ersten Temperatursensor zur Erfassung einer Heizkörpertemperatur eines in dem Raum angeordneten Heizkörpers, und

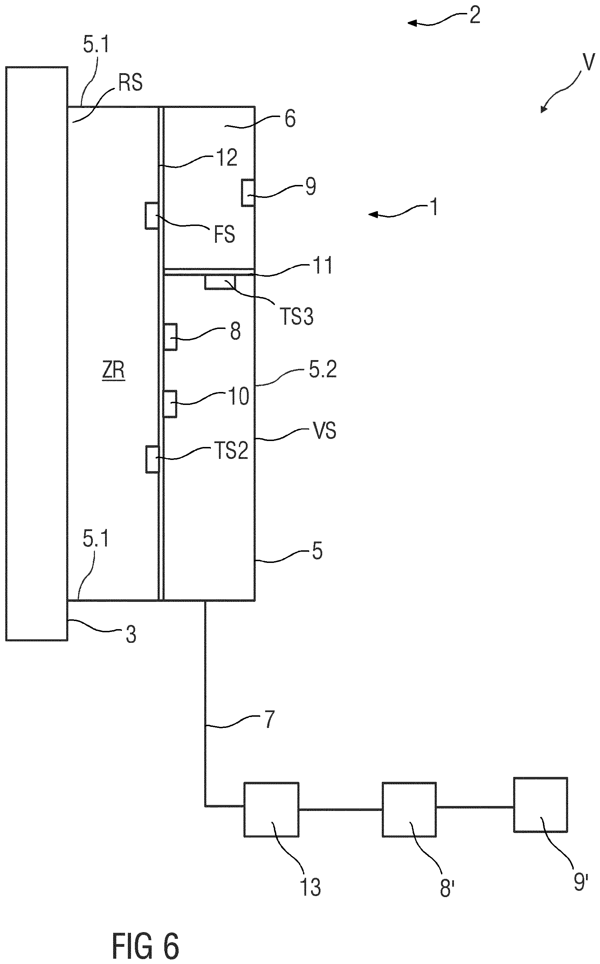

- Figur 6: schematisch einen an einem Heizkörper angeordneten elektronischen Heizkostenverteiler.

Einander entsprechende Teile sind in allen Figuren mit den gleichen Bezugszeichen versehen.

Die Figuren 1 bis 5 zeigen schematisch fünf beispielhafte Ausführungsformen eines elektronischen Heizkostenverteilers 1, welcher in einer Schimmelgefahrwarnerfunktion verwendbar ist. Hierzu umfasst der elektronische Heizkostenverteiler 1 in allen Ausführungsformen einen ersten Temperatursensor TS1 zur Erfassung einer Heizkörpertemperatur eines in einem Raum 2 angeordneten Heizkörpers 3, einen zweiten Temperatursensor TS2 zur Erfassung einer Wandtemperatur einer Wand 4 des Raums 2 oder zumindest einer wandnahen Raumlufttemperatur des Raums 2 in einem vorgegebenen Abstand zur Wand 4 des Raums 2 und einen Feuchtesensor FS. Genauer gesagt zeigen die Figuren 1 bis 5 jeweils eine Vorrichtung V mit einem solchen elektronischen Heizkostenverteiler 1. Die Vorrichtung V umfasst des Weiteren jeweils eine heizkostenverteilerexterne Ausleseeinheit 13, eine heizkostenverteilerexterne Auswerteeinheit 8` und eine heizkostenverteilerexterne Warneinheit 9`, welche über eine, insbesondere drahtlose, Kommunikationsverbindung 7 zumindest zeitweise mit dem elektronischen Heizkostenverteiler 1 verbunden sind.

Zusätzlich ist dieser elektronische Heizkostenverteiler 1 auch in einer Raumtemperaturüberwachungsfunktion verwendbar.

Der erste Temperatursensor TS1 ist als ein Fernfühler ausgebildet, d. h. außerhalb eines Gehäuses 5 einer Basiseinheit 6 des elektronischen Heizkostenverteilers 1 angeordnet und mit der Basiseinheit 6 durch eine kabellose oder kabelgebundene Sensoranbindung 15 verbunden. Dieser erste Temperatursensor TS1 ist mit dem im Raum 2 angeordneten Heizkörper 3 thermisch koppelbar oder, wie in den Figuren 1 bis 5 dargestellt, thermisch gekoppelt.

Der zweite Temperatursensor TS2 ist derart im elektronischen Heizkostenverteiler 1, insbesondere in dessen Basiseinheit 6, d. h. in und/oder an deren Gehäuse 5, angeordnet und der elektronische Heizkostenverteiler 1 ist derart ausgebildet, dass der zweite Temperatursensor TS2 durch eine Anordnung des elektronischen Heizkostenverteilers 1, insbesondere der Basiseinheit 6, an der Wand 4 des Raumes 2 an der Wand 4 oder in einem vorgegebenen, insbesondere möglichst geringen, Abstand zur Wand 4 positionierbar ist oder, wie in den Figuren 1 bis 5 dargestellt, positioniert ist und dadurch mit der Wand 4 oder zumindest mit der wandnahen Raumluft thermisch koppelbar oder, wie in den Figuren 1 bis 5 gezeigt, thermisch gekoppelt ist.

Der Feuchtesensor FS ist in den dargestellten Ausführungsformen jeweils in der Basiseinheit 6 integriert, d. h. in und/oder an deren Gehäuse 5 angeordnet, kann jedoch in anderen Ausführungsbeispielen beispielsweise als Fernfühler ausgebildet sein und dann, analog zum ersten Temperatursensor TS1, außerhalb des Gehäuses 5 der Basiseinheit 6 des elektronischen Heizkostenverteilers 1 angeordnet und mit der Basiseinheit 6 durch eine kabellose oder kabelgebundene Sensoranbindung 15 verbunden sein. In jedem Fall ist der Feuchtesensor FS in einem Luftvolumen angeordnet, dass offen gegenüber der Wand 4 und geschlossen gegenüber dem Raum 2 ausgebildet ist.

Des Weiteren umfasst der elektronische Heizkostenverteiler 1 vorteilhafterweise eine Auswerteeinheit 8, welche vorteilhafterweise ebenfalls in der Basiseinheit 6 integriert ist, insbesondere in deren Gehäuse 5 angeordnet ist, vorteilhafterweise eine Warneinheit 9 zur Ausgabe einer, insbesondere optischen und/oder akustischen, Warnmeldung und vorteilhafterweise eine Kommunikationseinheit 10 zur kabellosen oder kabelgebundenen Kommunikation mit mindestens einer externen, insbesondere heizkostenverteilerexternen und insbesondere auch raumexternen und beispielsweise auch gebäudeexternen, Einheit 13, 8', 9', insbesondere der Ausleseeinheit 13 und/oder der heizkostenverteilerexternen Auswerteeinheit 8` und/oder der heizkostenverteilerexternen Warneinheit 9`. D. h. die jeweilige heizkostenverteilerexterne Einheit 13, 8', 9`ist insbesondere außerhalb des Raums 2 angeordnet, in welchem der Heizkörper 3 und der elektronische Heizkostenverteiler 1 angeordnet sind, insbesondere auch außerhalb eines Gebäudes, in welchem dieser Raum 2 angeordnet ist. Die Warneinheit 9 und/oder die Kommunikationseinheit 10 ist/sind zweckmäßigerweise in und/oder an der Basiseinheit 6, insbesondere in und/oder an deren Gehäuse 5, angeordnet.

Der zweite Temperatursensor TS2 ist beispielsweise, wie in den Figuren 3 bis 5 gezeigt, auf einer Sensorleiterplatte 11 angeordnet, die in einem vorgegebenen Winkel, insbesondere senkrecht, zu einer Hauptleiterplatte 12 im Gehäuse 5 der Basiseinheit 6 angeordnet und mit der Hauptleiterplatte 12 verbunden ist, insbesondere auch elektrisch gekoppelt ist, so dass Signale des zweiten Temperatursensors TS2 über die Sensorleiterplatte 11 und die Hauptleiterplatte 12 zur Auswerteeinheit 8 übertragbar sind, die in den dargestellten Beispielen auf der Hauptleiterplatte 12 angeordnet ist. Der zweite Temperatursensor TS2 ist dabei an einem von der Hauptleiterplatte 12 abgewandten Ende der Sensorleiterplatte 11 angeordnet. Beispielsweise ist/sind die Auswerteeinheit 8, wie bereits erwähnt, und/oder die Kommunikationseinheit 10 und/oder die Warneinheit 9 auf der Hauptleiterplatte 12 angeordnet.

Der elektronische Heizkostenverteiler 1 ist beispielsweise im Wesentlichen als ein herkömmlicher Heizkostenverteiler ausgebildet, wobei der erste Temperatursensor TS1 zur Erfassung der Heizkörpertemperatur als Fernfühler ausgebildet ist. Der wesentliche Unterschied zu einem herkömmlichen Heizkostenverteiler sind der zusätzliche Feuchtesensor FS und die Warneinheit 9 und ein vorteilhafterweise vorhandener dritter Temperatursensor TS3, wie beispielsweise in den Ausführungsformen gemäß der Figuren 2 bis 5 gezeigt. Die Funktion dieses dritten Temperatursensors TS3 wird im Folgenden noch näher erläutert.

Der elektronische Heizkostenverteiler 1 ist derart ausgebildet, dass der zweite Temperatursensor TS2 im Bereich einer Rückseite RS des Heizkostenverteilers 1, insbesondere der Basiseinheit 6, oder zumindest an einer der Rückseite RS zugewandten Seite der Hauptleiterplatte 12 positioniert ist. Diese Rückseite RS ist eine Montageseite, welche bei der Wandmontage der Wand 4 zugewandt ist. Die Wandmontage erfolgt vorteilhafterweise mittels einer Halterung für den elektronischen Heizkostenverteiler 1, insbesondere für die Basiseinheit 6, beispielsweise mittels einer Montageplatte.

Die Ausführungsformen des elektronischen Heizkostenverteilers 1 gemäß den Figuren 1 bis 5 ermöglichen den Betrieb des elektronischen Heizkostenverteilers 1 in der Heizkostenverteilerfunktion oder in der Schimmelgefahrwarnerfunktion, jedoch ermöglichen sie zudem den Betrieb des elektronischen Heizkostenverteilers 1, insbesondere auch gleichzeitig, in der Heizkostenverteilerfunktion und in der Schimmelgefahrwarnerfunktion, insbesondere ohne dass hierfür Umbaumaßnahmen bezüglich der Ausbildung und Anordnung des elektronischen Heizkostenverteilers 1 erforderlich sind.

Weist der elektronische Heizkostenverteiler 1 den dritten Temperatursensor TS3 nicht auf, wie in Figur 1 gezeigt, so arbeitet der elektronische Heizkostenverteiler 1 in der Heizkostenverteilerfunktion als "Ein-Sensor-Gerät". Weist der elektronische Heizkostenverteiler 1 den dritten Temperatursensor TS3 auf, wie in den Figuren 2 bis 5 gezeigt, so arbeitet der elektronische Heizkostenverteiler 1 vorteilhafterweise in der Heizkostenverteilerfunktion als "Zwei-Sensor-Gerät".

Der dritte Temperatursensor TS3 ist zur Erfassung der wandfernen Raumlufttemperatur des Raums 2 vorgesehen. Er ist vom zweiten Temperatursensor TS2 beabstandet angeordnet, insbesondere derart beabstandet angeordnet, dass er durch die Anordnung des elektronischen Heizkostenverteilers 1, insbesondere der Basiseinheit 6, an der Wand 4 des Raumes 2 in einem größeren Abstand zur Wand 4 positionierbar oder, wie in den Figuren 2 bis 5 gezeigt, positioniert ist als der zweite Temperatursensor TS2 und somit die wandferne Raumlufttemperatur erfassen kann, d. h. eine Raumlufttemperatur von Raumluft, die weiter entfernt von der Wand 4 ist als die Raumluft, deren wandnahe Raumlufttemperatur vom zweiten Temperatursensor TS2 erfasst werden kann. Der dritte Temperatursensor TS3 ist in den dargestellten Beispielen im Bereich der Vorderseite VS des Gehäuses 5 der Basiseinheit 6 im und/oder am Gehäuse 5 angeordnet, insbesondere im Bereich der hier vorteilhafterweise vorgesehenen Öffnung O des Gehäuses 5, und der zweite Temperatursensor TS2 ist im Bereich der Rückseite RS des Gehäuses 5 der Basiseinheit 6 angeordnet.

Der dritte Temperatursensor TS3 ist derart im elektronischen Heizkostenverteiler 1, insbesondere in dessen Basiseinheit 6, d. h. in deren Gehäuse 5, vorzugsweise auf der raumseitigen Seite der Hauptleiterplatte 12 oder auf einer zur Raumseite, d. h. zur Vorderseite VS, hin ausgerichteten Sensorleiterplatte 11, angeordnet und der elektronische Heizkostenverteiler 1 ist derart ausgebildet, dass der dritte Temperatursensor TS3 durch eine Anordnung des elektronischen Heizkostenverteilers 1, insbesondere der Basiseinheit 6, an der Wand 4 des Raumes 2 möglichst weit von der Wand 4 entfernt, insbesondere mit möglichst geringem Abstand zur Vorderseite VS des Gehäuses 5 positionierbar ist oder, wie in den Figuren 2 bis 5 dargestellt, positioniert ist und dadurch thermisch gut mit der Temperatur des Raumes 2, insbesondere der wandfernen Raumluft, thermisch koppelbar oder, wie in den Figuren 2 bis 5 gezeigt, thermisch gekoppelt ist. Ist der dritte Temperatursensor TS3 direkt auf der dem Raum zugewandten Seite der Hauptleiterplatte 12 angeordnet, so ist vorteilhaft das Gehäuse 5 der Basiseinheit 6 des Heizkostenverteilers 1 mit einer oder mehreren Gehäuseöffnungen 14 versehen, um den Luftaustausch mit dem Raum 2 und damit die thermische Kopplung des dritten Temperatursensors TS3 an die Raumluft zu verbessern.

In der Ausführungsform gemäß Figur 2 ist nur der dritte Temperatursensor TS3 auf der Sensorleiterplatte 11 angeordnet und der zweite Temperatursensor TS2 und der Feuchtesensor FS sind jeweils auf der der Rückseite RS zugewandten Seite der Hauptleiterplatte 12 angeordnet. In den Ausführungsformen gemäß Figur 3 und 4 sind der zweite Temperatursensor TS2 und der Feuchtesensor FS auf der Sensorleiterplatte 11 angeordnet und in diesem Beispiel als eine gemeinsame Sensoreinheit ausgebildet und der dritte Temperatursensor TS3 ist auf der Hauptleiterplatte 12 angeordnet, genauer gesagt auf einer Seite der Hauptleiterplatte 12, welche einer Vorderseite VS des elektronischen Heizkostenverteilers 1, insbesondere der Basiseinheit 6, zugewandt ist, die einem Inneren des Raums 2 zugewandt ist.

Vorteilhafterweise weist das Gehäuse 5 im Bereich des dritten Temperatursensors TS3 eine oder mehrere Gehäuseöffnungen 14 auf, wie beispielhaft in Figur 4 gezeigt. In der Ausführungsform gemäß Figur 5 sind sowohl der zweite Temperatursensor TS2 und der Feuchtesensor FS, welche in diesem Beispiel als gemeinsame Sensoreinheit ausgebildet sind, als auch der dritte Temperatursensor TS3 auf der Sensorleiterplatte 11 angeordnet, an gegenüberliegenden Enden der Sensorleiterplatte 11, d. h. der zweite Temperatursensor TS2 an einem der Rückseite RS des Gehäuses 5 zugewandten Ende und der dritte Temperatursensor TS3 an einem der Vorderseite VS des Gehäuses 5 zugewandten Ende. Vorteilhafterweise ist dazwischen die Hauptleiterplatte 12 angeordnet, d. h. die Sensorleiterplatte 11 durchdringt die Hauptleiterplatte 12, wie in Figur 5 gezeigt. Dadurch wirkt die Hauptleiterplatte 12 als thermische Abschirmung für den zweiten Temperatursensor TS2 gegenüber der wandfernen Raumlufttemperatur und für den dritten Temperatursensor TS3 gegenüber der Wandtemperatur und/oder wandnahen Raumlufttemperatur, so dass eine bessere Temperaturerfassung mittels des zweiten Temperatursensors TS2 und dritten Temperatursensors TS3 ermöglicht wird.

Bei den Ausführungsformen gemäß den Figuren 1 und 2 kann als zweiter Temperatursensor TS2 beispielsweise ein herkömmlicher in der Basiseinheit 6 integrierter Heizkörpertemperatursensor verwendet werden, welcher bei einem herkömmlichen Heizkostenverteiler, bei welchem die Basiseinheit 6 am Heizkörper 3 angeordnet werden würde, zur Heizkörpertemperaturerfassung verwendet werden würde. Ein solcher integrierter Heizkörpertemperatursensor wird bei herkömmlichen Heizkostenverteilern deaktiviert, wenn ein als Fernfühler ausgebildeter Heizkörpertemperatursensor angeschlossen wird. Bei der in den Figuren 1 und 2 dargestellten Ausführungsform erfolgt diese Deaktivierung trotz des angeschlossenen als Fernfühler ausgebildeten ersten Temperatursensors TS1 zur Erfassung der Heizkörpertemperatur nicht, d. h. bei diesen Ausführungsformen des elektronischen Heizkostenverteilers 1 wird diese Deaktivierung bei Anschluss des als Fernfühler ausgebildeten ersten Temperatursensors TS1 verhindert, so dass dieser bei herkömmlichen Heizkostenverteilern als Heizkörpertemperatursensor vorgesehene interne Temperatursensor nun als zweiter Temperatursensor TS2 zur Erfassung der Wandtemperatur der Wand 4 des Raums 2 oder zumindest der wandnahen Raumlufttemperatur des Raums 2 im vorgegebenen Abstand zur Wand 4 des Raums 2 verwendet werden kann, indem die Basiseinheit 6 an der Wand 4 des Raums 2 angeordnet wird, wie in den Figuren 1 und 2 gezeigt. Dadurch wird es ermöglicht, diesen bei herkömmlichen Heizkostenverteilern als Heizkörpertemperatursensor vorgesehenen Temperatursensor als zweiten Temperatursensor TS2 zur Erfassung der Wandtemperatur oder zumindest der wandnahen Raumlufttemperatur zu verwenden. Auf diese Weise wird es ermöglicht, einen herkömmlichen Heizkostenverteiler mit einem relativ geringen Modifizierungsaufwand zum hier beschriebenen elektronischen Heizkostenverteiler 1 umzugestalten. Beispielsweise muss hierfür noch der Feuchtesensor vorgesehen werden und eine Auswertung und Verarbeitung von Sensorergebnissen der Sensoren TS1, TS2, TS3, FS angepasst werden, um die Heizkostenverteilerfunktion und die Schimmelgefahrwarnerfunktion zu ermöglichen.

Wie bereit beschrieben, ist in den Ausführungsform gemäß Figur 2 und 5 der dritte Temperatursensor TS3 auf der Sensorleiterplatte 11 angeordnet, genauer gesagt an dem der Vorderseite VS des Gehäuses 5 zugewandten Ende, insbesondere im Bereich der Gehäuseöffnungen 14 im Gehäuse 5, und der zweite Temperatursensor TS2 ist im Bereich der Rückseite RS des Gehäuses 5 angeordnet, vorteilhafterweise vom dritten Temperatursensor TS3 durch die dazwischen angeordnete Hauptleiterplatte 12 thermisch abgeschirmt. Beispielsweise ist der zweite Temperatursensor TS2 auf einer der Rückseite RS des Gehäuses 5 zugewandten Rückseite der Hauptleiterplatte 12 angeordnet, wie in den Figuren 1 und 2 gezeigt, oder auf der Sensorleiterplatte 11, wie in den Figuren 3 bis 5 gezeigt, wobei auch hier die Hauptleiterplatte 12 zwischen dem zweite Temperatursensor TS2 und dem dritten Temperatursensor TS3 angeordnet ist. Dadurch wirkt die Hauptleiterplatte 12 als thermische Abschirmung für den zweiten Temperatursensor TS2 gegenüber der wandfernen Raumlufttemperatur und für den dritten Temperatursensor TS3, wenn dieser vorhanden ist, gegenüber der Wandtemperatur und/oder wandnahen Raumlufttemperatur, so dass eine bessere Temperaturerfassung mittels des zweiten Temperatursensors TS2 und, wenn vorhanden, mittels des dritten Temperatursensors TS3 ermöglicht wird.

Zum Betrieb des elektronischen Heizostenverteilers 1 in der Heizkostenverteilerfunktion wird bei der in der in den Figuren 1 bis 5 dargestellten Anordnung der Basiseinheit 6 an der Wand 4 mittels des mit dem Heizkörper 3 thermisch gekoppelten ersten Temperatursensors TS1 die Heizkörpertemperatur des Heizkörpers 3 erfasst. Bei den Ausführungsformen gemäß den Figuren 2 bis 5 wird zusätzlich mittels des mit der wandfernen Raumluft thermisch gekoppelten dritten Temperatursensors TS3 die wandferne Raumlufttemperatur des Raums 2 erfasst, wobei bei der Ausführungsform gemäß Figur 1 mittels der erfassten Heizkörpertemperatur und bei den Ausführungsformen gemäß den Figuren 2 bis 5 mittels der erfassten Heizkörpertemperatur und der erfassten wandfernen Raumlufttemperatur eine vom Heizkörper 3 abgegebene Wärmemenge oder ein Äquivalenzwert für die vom Heizkörper abgegebene Wärmemenge ermittelt wird.

Zum Betrieb des elektronischen Heizostenverteilers 1 in der Schimmelgefahrwarnerfunktion wird mittels des mit dem Heizkörper 3 thermisch gekoppelten ersten Temperatursensors TS1 die Heizkörpertemperatur des Heizkörpers 3 erfasst, mittels des mit der Wand 4 oder zumindest mit der wandnahen Raumluft thermisch gekoppelten zweiten Temperatursensors TS2 wird die Wandtemperatur der Wand 4 des Raums 2 oder zumindest die wandnahe Raumlufttemperatur des Raums 2 im vorgegebenen, insbesondere möglichst geringen, Abstand zur Wand 4 des Raums 2 erfasst, mittels des Feuchtesensors FS wird die Feuchtigkeit, insbesondere die Luftfeuchtigkeit in dem Raum 2, erfasst und mittels der erfassten Heizkörpertemperatur, der erfassten Wandtemperatur oder wandnahen Raumlufttemperatur im vorgegebenen Abstand zur Wand 4 des Raums 2 und der erfassten Feuchtigkeit wird die Höhe der Schimmelgefahr ermittelt.

Zum Betrieb des elektronischen Heizostenverteilers 1 in der Heizkostenverteilerfunktion und, insbesondere gleichzeitig, in der Schimmelgefahrwarnerfunktion wird mittels des mit dem Heizkörper 3 thermisch gekoppelten ersten Temperatursensors TS1 die Heizkörpertemperatur des Heizkörpers 3 erfasst, mittels des mit der Wand 4 oder zumindest mit der wandnahen Raumluft thermisch gekoppelten zweiten Temperatursensors TS2 wird die Wandtemperatur der Wand 4 des Raums 2 oder zumindest die wandnahe Raumlufttemperatur des Raums 2 im vorgegebenen, insbesondere möglichst geringen, Abstand zur Wand 4 des Raums 2 erfasst und mittels des Feuchtesensors FS wird die Feuchtigkeit, insbesondere die Luftfeuchtigkeit in dem Raum 2, erfasst. Bei den Ausführungsformen gemäß den Figuren 2 bis 5 wird zusätzlich mittels des mit der wandfernen Raumluft thermisch gekoppelten dritten Temperatursensors TS3 die wandferne Raumlufttemperatur des Raums 2 erfasst, insbesondere in einem größeren Abstand zur Wand 4 des Raums 2 als durch den zweiten Temperatursensor TS2. Mittels der erfassten Heizkörpertemperatur und bei den Ausführungsformen gemäß den Figuren 2 bis 5 mittels der mittels des dritten Temperatursensors TS3 erfassten wandfernen Raumlufttemperatur wird die vom Heizkörper 3 abgegebene Wärmemenge oder der Äquivalenzwert für die vom Heizkörper 3 abgegebene Wärmemenge ermittelt. Mittels der erfassten Heizkörpertemperatur, der mittels des zweiten Temperatursensors TS2 erfassten Wandtemperatur oder wandnahen Raumlufttemperatur im vorgegebenen Abstand zur Wand 4 des Raums 2 und der erfassten Feuchtigkeit wird die Höhe der Schimmelgefahr ermittelt.

Zum Betrieb des elektronischen Heizkostenverteilers 1 in der Heizkostenverteilerfunktion und, insbesondere gleichzeitig, in der Schimmelgefahrwarnerfunktion und, insbesondere gleichzeitig, in der Raumüberwachungsfunktion wird mittels des mit dem Heizkörper 3 thermisch gekoppelten ersten Temperatursensors TS1 die Heizkörpertemperatur des Heizkörpers 3 erfasst, mittels des mit der Wand 4 oder zumindest mit der wandnahen Raumluft thermisch gekoppelten zweiten Temperatursensors TS2 wird die Wandtemperatur der Wand 4 des Raums 2 oder zumindest die wandnahe Raumlufttemperatur des Raums 2 im vorgegebenen, insbesondere möglichst geringen, Abstand zur Wand 4 des Raums 2 erfasst, mittels des mit der wandfernen Raumluft thermisch gekoppelten dritten Temperatursensors TS3 wird die wandferne Raumlufttemperatur des Raums 2 erfasst, insbesondere in einem größeren Abstand zur Wand 4 des Raums 2 als durch den zweiten Temperatursensor TS2, und mittels des Feuchtesensors FS wird die Feuchtigkeit, insbesondere die Luftfeuchtigkeit in der Nähe der Wand 4, erfasst. Mittels der erfassten Heizkörpertemperatur und beispielsweise zusätzlich mittels der mittels des dritten Temperatursensors TS3 erfassten, wandfernen Raumlufttemperatur wird die vom Heizkörper 3 abgegebene Wärmemenge oder der Äquivalenzwert für die vom Heizkörper 3 abgegebene Wärmemenge ermittelt. Mittels der vom zweiten Temperatursensors TS2 erfassten Wandtemperatur oder wandnahen Raumlufttemperatur im vorgegebenen Abstand zur Wand 4 des Raums 2 und der erfassten Feuchtigkeit wird die Höhe der Schimmelgefahr ermittelt. Mittels der mit dem dritten Temperatursensor TS3 ermittelten Raumlufttemperatur wird die Raumtemperaturüberwachungsfunktion durchgeführt und die Über- bzw. Unterschreitung von vorgegebenen Temperaturschwellen überwacht.

Die Schimmelgefahrwarnfunktion umfasst den Vergleich der Heizkörpertemperatur, vorteilhafterweise der Raumlufttemperatur und der Wandtemperatur und die daraus abgeleitete Bewertung, ob die Heiztemperatur und -dauer dazu geeignet sind, eine Raumtemperatur zu liefern, die einen vorgebbaren Schwellwert zu erreichen geeignet ist bzw. die Raumtemperatur so zu erhöhen, dass die Wandtemperatur in Folge der erhöhten Raumtemperatur so ansteigen kann, dass der Feuchtegehalt der wandnahen Luft so verringert wird, dass die Schimmelbildungsgefahr verhindert oder vermindert wird. Der elektronische Heizkostenverteiler 1 ist somit alternativ oder zusätzlich zur Heizkostenverteilerfunktion als Schimmelgefahrwarner und zur Raumtemperaturüberwachung verwendbar.

Die vom Heizkörper 3 abgegebene Wärmemenge bzw. der Äquivalenzwert für die vom Heizkörper 3 abgegebene Wärmemenge und/oder die Höhe der Schimmelgefahr und/oder die Einhaltung vorgegebener Raumtemperaturschwellwerte werden/wird bei allen dargestellten Ausführungsformen insbesondere mittels der, insbesondere in der Basiseinheit 6, d. h. in deren Gehäuse 5, angeordneten, Auswerteeinheit 8 des elektronischen Heizkostenverteilers 1 ermittelt. Der elektronische Heizkostenverteiler 1, insbesondere dessen Auswerteeinheit 8, ist hierfür entsprechend ausgebildet und eingerichtet. Eine externe Auswertung ist somit nicht erforderlich. Sie ist jedoch mittels der Kommunikationseinheit 10 und möglicher heizkostenverteilerexternen Einheiten 13, 8', 9', insbesondere mittels der Ausleseeinheit 13, der heizkostenverteilerexternen Auswerteeinheit 8` und der heizkostenverteilerexternen Warneinheit 9`, möglich und sinnvoll, um beispielsweise den Bewohner der Wohnung auf verschiedenen Wegen mit relevanten Informationen, insbesondere Warnungen, zu versorgen und auch beispielsweise der Wohnungsverwaltung relevante Informationen übermitteln zu können.

Vorteilhafterweise wird, insbesondere durch die Auswerteeinheit 8, eine Warnmeldung generiert, wenn die ermittelte Höhe der Schimmelgefahr einen vorgegebenen Grenzwert überschreitet. Dadurch kann sofort ein Hinweis bezüglich der bestehenden Schimmelgefahr erfolgen.

Beispielsweise wird die generierte Warnmeldung durch die Warneinheit 9 ausgegeben und/oder mittels der Kommunikationseinheit 10 an die externe Ausleseeinheit 13 übertragen. Dadurch können im Raum 2 anwesende Personen mittels der Warneinheit 9 auf die Schimmelgefahr hingewiesen werden und/oder es können externe Verantwortliche, beispielsweise eine Hausverwaltung, durch die übertragene Warnmeldung auf die Schimmelgefahr hingewiesen werden.

In einer möglichen Ausführungsform des Verfahrens wird die erfasste Heizkörpertemperatur mittels der Kommunikationseinheit 10 an die zumindest eine heizkostenverteilerexterne Einheit 13, 8', 9', insbesondere an die externe Ausleseeinheit 13, übertragen, insbesondere auch im Zeitverlauf mehrfach übertragen, insbesondere nach einer ermittelten Schimmelgefahr, d. h. wenn die Höhe der Schimmelgefahr den vorgegebenen Grenzwert überschritten hat, und nach einer erfolgten entsprechenden Warnmeldung im Zeitverlauf mehrfach übertragen. Dadurch kann extern, d. h. beispielsweise von der Hausverwaltung, überprüft werden, ob und wie auf die Warnmeldung bezüglich der Schimmelgefahr reagiert wird, insbesondere ob der Heizkörper 3 aktiviert wird und somit der Raum 2 ausreichend beheizt wird, um die Schimmelgefahr zu reduzieren. Alternativ oder zusätzlich können auch die erfasste wandferne Raumlufttemperatur des Raums 2 und/oder die erfasste Wandtemperatur der Wand 4 des Raums 2 oder zumindest die wandnahe Raumlufttemperatur des Raums 2 im vorgegebenen Abstand zur Wand 4 des Raums 2 und/oder das erfasste zeitliche Raumtemperaturprofil und/oder der erfasste Feuchtemesswert auf diese Weise übertragen werden, um beispielsweise zu überprüfen, ob entsprechende Reaktionen, insbesondere das Aktivieren oder Deaktivieren des Heizkörpers 3, zu überprüfen.

Figuren 1 bis 5 zeigen ein Gehäuse 5, das schalenförmig oder deckelförmig ausgebildet, wobei ein Gehäuserand 5.1 bündig auf der Wand 4 angeordnet ist und beispielsweise weitgehend dicht, insbesondere mediendicht mit der Wand 4 abschließt. Die Hauptleiterplatte 12 kann dabei in das in Richtung der Wand 4 offenen Gehäuse 5 eingesetzt und derart angeordnet sein, dass ein zwischen der Wand 4 und der Hauptleiterplatte 12 gebildeter Zwischenraum ZR vom Gehäuse 5, insbesondere vom Gehäuserand 5.1, umschlossen oder eingekapselt ist. Mit anderen Worten: Das Gehäuse 5 ist zwischen der Wand 4 und der Hauptleiterplatte 12 im Wesentlichen geschlossen gegenüber dem Raum 2 ausgebildet.

Dabei ist bzw. sind der Feuchtesensor FS und/oder der zweite Temperatursensor TS2 in einem Luftvolumen angeordnet, dass offen gegenüber der Wand 4 und geschlossen gegenüber dem Raum 2 ausgebildet ist.

Dabei kann das Gehäuse 5 derart ausgebildet sein, dass es mit minimaler Auflagefläche, beispielsweise nur mit dem Gehäuserand 5.1, auf der Wand 4 aufliegt. Hierdurch ist ein auf der Hauptleiterplatte 12 in Richtung der Wand 4 ausgerichteter und im Zwischenraum ZR angeordneter Sensor, wie der Feuchtesensor FS und/oder der zweite Temperatursensor TS2, thermisch mit der Wand 4 koppelbar, insbesondere direkt oder indirekt über Luftaustausch mit der Wand 4 thermisch koppelbar. Durch die im Wesentlichen gegenüber dem Raum 2 geschlossene Ausbildung des Gehäuses 5 zwischen Wand 4 und Hauptleiterplatte 12 kann die natürliche Konvektion an der Wand 4 nicht oder zumindest sehr stark eingeschränkt durch das Luftvolumen unterhalb der Hauptleiterplatte 12 erfolgen.

Die minimale Auflagefläche des Gehäuses 5 auf der Wand 4 ist vor allem wichtig, um eine Schimmelbildung auf einer feuchten Wand 4 zwischen Wand 4 und Auflagefläche zu vermeiden. Für eine hinreichende Durchlüftung kann das Gehäuse 5 auf dessen Deckseite 5.2 und damit auf der von der Wand 4 des Heizkörpers abgewandten Deckseite 5.2 Öffnungen 14 zum Belüften aufweisen, wie in Figuren 4 und 5 dargestellt.

Figur 6 zeigt eine Anordnung des elektronischen Heizkostenverteilers 1, insbesondere der Basiseinheit 6, nicht an der Wand 4, sondern am Heizkörper 3. Dies zeigt eine weitere Verwendungsmöglichkeit des hier beschriebenen elektronischen Heizkostenverteilers 1, insbesondere für dessen Betrieb in der Heizkostenverteilerfunktion. Durch diese Anordnung der Basiseinheit 6 direkt am Heizkörper 1 ist der als Fernfühler ausgebildete erste Temperatursensor TS1 nicht erforderlich. Stattdessen kann der zweite Temperatursensor TS2, welcher eigentlich zur Erfassung der Wandtemperatur einer Wand 4 eines Raums 2 oder zumindest einer wandnahen Raumlufttemperatur des Raums 2 in einem vorgegebenen Abstand zur Wand 4 des Raums 2 vorgesehen ist, hier die Funktion des ersten Temperatursensors TS1 übernehmen, nämlich die Erfassung der Heizkörpertemperatur des in einem Raum 2 angeordneten Heizkörpers 3. In diesem Fall wird dann die Heizkörpertemperatur des Heizkörpers 3 mittels des nun mit dem Heizkörper 3 thermisch gekoppelten zweiten Temperatursensors TS2 erfasst und die vom Heizkörper abgegebene Wärmemenge oder der Äquivalenzwert für die vom Heizkörper abgegebene Wärmemenge wird mittels der auf diese Weise erfassten Heizkörpertemperatur und beispielsweise der zusätzlich erfassten wandfernen Raumlufttemperatur des Raums 2 ermittelt.

### BEZUGSZEICHENLISTE

- 1: Heizkostenverteiler
- 2: Raum
- 3: Heizkörper
- 4: Wand
- 5: Gehäuse
- 6: Basiseinheit
- 7: Kommunikationsverbindung
- 8: Auswerteeinheit
- 8`: heizkostenverteilerexterne Auswerteeinheit
- 9: Warneinheit
- 9`: heizkostenverteilerexterne Warneinheit
- 10: Kommunikationseinheit
- 11: Sensorleiterplatte
- 12: Hauptleiterplatte
- 13: Ausleseeinheit
- 14: Gehäuseöffnung
- 15: Sensoranbindung

- FS: Feuchtesensor
- RS: Rückseite
- TS1: erster Temperatursensor
- TS2: zweiter Temperatursensor
- TS3: dritter Temperatursensor
- VS: Vorderseite

## Patentansprüche

1. Elektronischer Heizkostenverteiler (1), umfassend
- einen ersten Temperatursensor (TS1) zur Erfassung einer Heizkörpertemperatur eines in einem Raum (2) angeordneten Heizkörpers (3),
- einen zweiten Temperatursensor (TS2) zur Erfassung einer Wandtemperatur einer Wand (4) des Raums (2) oder zumindest einer wandnahen Raumlufttemperatur des Raums (2) in einem vorgegebenen Abstand zur Wand (4) des Raums (2), und
- einen Feuchtesensor (FS),
**dadurch gekennzeichnet, dass**
- der erste Temperatursensor (TS1) als ein Fernfühler ausgebildet ist und mit dem im Raum (2) angeordneten Heizkörper (3) thermisch koppelbar ist,
- der zweite Temperatursensor (TS2) derart im elektronischen Heizkostenverteiler (1) angeordnet ist und der elektronische Heizkostenverteiler (1) derart ausgebildet ist, dass der zweite Temperatursensor (TS2) durch eine Anordnung des elektronischen Heizkostenverteilers (1) an der Wand (4) des Raumes (2) an der Wand (4) oder in einem vorgegebenen Abstand zur Wand (4) positionierbar oder positioniert ist, und
- der zweite Temperatursensor (TS2) und der Feuchtesensor (FS) in und/oder an einem Gehäuse (5) einer Basiseinheit (6) des elektronischen Heizkostenverteilers (1) angeordnet sind.

2. Elektronischer Heizkostenverteiler (1) nach Anspruch 1,
**gekennzeichnet durch** einen dritten Temperatursensor (TS3) zur Erfassung einer wandfernen Raumlufttemperatur des Raums (2), welcher vom zweiten Temperatursensor (TS2) beabstandet angeordnet ist, insbesondere derart beabstandet angeordnet ist, dass er durch die Anordnung des elektronischen Heizkostenverteilers (1) an der Wand (4) des Raumes (2) in einem größeren Abstand zur Wand (4) positionierbar oder positioniert ist als der zweite Temperatursensor (TS2).

3. Elektronischer Heizkostenverteiler (1) nach einem der vorhergehenden Ansprüche, **dadurch gekennzeichnet, dass** der zweite Temperatursensor (TS2) als ein im elektronischen Heizkostenverteiler (1) integrierter Heizkörpertemperatursensor ausgebildet ist, welcher zur Erfassung der Heizkörpertemperatur bei am Heizkörper (3) angeordnetem elektronischen Heizkostenverteiler (1) und nicht verwendetem ersten Temperatursensor (TS1) vorgesehen ist.

4. Elektronischer Heizkostenverteiler (1) nach einem der vorhergehenden Ansprüche, **dadurch gekennzeichnet, dass** der zweite Temperatursensor (TS2) auf einer Sensorleiterplatte (11) angeordnet ist, die in einem vorgegebenen Winkel, insbesondere senkrecht, zu einer Hauptleiterplatte (12) angeordnet und mit der Hauptleiterplatte (12) verbunden ist.

5. Elektronischer Heizkostenverteiler (1) nach einem der vorhergehenden Ansprüche, **gekennzeichnet durch** eine Auswerteeinheit (8).

6. Elektronischer Heizkostenverteiler (1) nach einem der vorhergehenden Ansprüche, **gekennzeichnet durch** eine Warneinheit (9).

7. Elektronischer Heizkostenverteiler (1) nach einem der vorhergehenden Ansprüche, **gekennzeichnet durch** eine Kommunikationseinheit (10) zur Kommunikation mit mindestens einer heizkostenverteilerexternen Einheit.

8. Elektronischer Heizkostenverteiler (1) nach einem der vorhergehenden Ansprüche, **dadurch gekennzeichnet, dass** der zweite Temperatursensor (TS2) und der Feuchtesensor (FS) als eine gemeinsame Sensoreinheit ausgebildet sind, wobei insbesondere der zweite Temperatursensor (TS2) im Feuchtesensor (FS) integriert ist.

9. Verfahren zum Betrieb eines elektronischen Heizkostenverteilers (1) nach einem der Ansprüche 1 bis 8 in einer Heizkostenverteilerfunktion und/oder in einer Schimmelgefahrwarnerfunktion,
- wobei zum Betrieb des elektronischen Heizostenverteilers (1) ausschließlich in der Heizkostenverteilerfunktion mittels des ersten Temperatursensors (TS1) oder mittels des zweiten Temperatursensors (TS2) die Heizkörpertemperatur des Heizkörpers (3) erfasst wird und zumindest mittels der erfassten Heizkörpertemperatur eine vom Heizkörper (3) abgegebene Wärmemenge oder ein Äquivalenzwert für die vom Heizkörper (3) abgegebene Wärmemenge ermittelt wird,
- wobei zum Betrieb des elektronischen Heizostenverteilers (1) ausschließlich in der Schimmelgefahrwarnerfunktion mittels des ersten Temperatursensor (TS1) die Heizkörpertemperatur des Heizkörpers (3) erfasst wird, mittels des zweiten Temperatursensors (TS2) die Wandtemperatur der Wand (4) des Raums (2) oder zumindest die wandnahe Raumlufttemperatur des Raums (2) im vorgegebenen Abstand zur Wand (4) des Raums (2) erfasst wird und mittels des Feuchtesensors (FS) eine Feuchtigkeit, insbesondere eine Luftfeuchtigkeit in dem Raum (2), erfasst wird und mittels der erfassten Heizkörpertemperatur, der erfassten Wandtemperatur oder wandnahen Raumlufttemperatur im vorgegebenen Abstand zur Wand (4) des Raums (2) und der erfassten Feuchtigkeit eine Höhe einer Schimmelgefahr ermittelt wird,
- wobei zum Betrieb des elektronischen Heizostenverteilers (1) in der Heizkostenverteilerfunktion und in der Schimmelgefahrwarnerfunktion mittels des ersten Temperatursensors (TS1) die Heizkörpertemperatur des Heizkörpers (3) erfasst wird, mittels des zweiten Temperatursensors (TS2) die Wandtemperatur der Wand (4) des Raums (2) oder zumindest die wandnahe Raumlufttemperatur des Raums (2) im vorgegebenen Abstand zur Wand (4) des Raums (2) erfasst wird und mittels des Feuchtesensors (FS) die Feuchtigkeit, insbesondere die Luftfeuchtigkeit in dem Raum (2), erfasst wird und zumindest mittels der erfassten Heizkörpertemperatur die vom Heizkörper (3) abgegebene Wärmemenge oder der Äquivalenzwert für die vom Heizkörper (3) abgegebene Wärmemenge ermittelt wird und mittels der erfassten Heizkörpertemperatur, der erfassten Wandtemperatur oder wandnahen Raumlufttemperatur im vorgegebenen Abstand zur Wand (4) des Raums (2) und der erfassten Feuchtigkeit die Höhe der Schimmelgefahr ermittelt wird.

10. Verfahren nach Anspruch 9,
**dadurch gekennzeichnet, dass** zum Betrieb des elektronischen Heizkostenverteilers (1) ausschließlich in der Heizkostenverteilerfunktion und/oder in der Heizkostenverteilerfunktion und in der Schimmelgefahrwarnerfunktion zusätzlich mittels des dritten Temperatursensors (TS3) die wandferne Raumlufttemperatur des Raums (2) erfasst wird und mittels der erfassten Heizkörpertemperatur und der erfassten wandfernen Raumlufttemperatur die vom Heizkörper (3) abgegebene Wärmemenge oder der Äquivalenzwert für die vom Heizkörper (3) abgegebene Wärmemenge ermittelt wird.

11. Verfahren nach Anspruch 9 oder 10,
**dadurch gekennzeichnet, dass** ein zeitliches Raumlufttemperaturprofil ermittelt wird, indem mittels des dritten Temperatursensors (TS3) die wandferne Raumlufttemperatur des Raums (2) im Zeitverlauf erfasst wird.

12. Verfahren nach einem der Ansprüche 9 bis 11,
**dadurch gekennzeichnet, dass** die vom Heizkörper (3) abgegebene Wärmemenge oder der Äquivalenzwert für die vom Heizkörper (3) abgegebene Wärmemenge und/oder die Höhe der Schimmelgefahr und/oder das zeitliche Raumtemperaturprofil mittels der Auswerteeinheit (8) des elektronischen Heizkostenverteilers (1) ermittelt werden/wird.

13. Verfahren nach einem der Ansprüche 9 bis 12,
**dadurch gekennzeichnet, dass** eine Warnmeldung generiert wird, wenn die ermittelte Höhe der Schimmelgefahr einen vorgegebenen Grenzwert überschreitet und/oder wenn das zeitliche Raumtemperaturprofil einen vorgegebenen Grenzwert unterschreitet oder überschreitet.

14. Verfahren nach Anspruch 13,
**dadurch gekennzeichnet, dass** die generierte Warnmeldung durch die Warneinheit (9) ausgegeben und/oder mittels der Kommunikationseinheit (10) an die mindestens eine heizkostenverteilerexterne Einheit übertragen wird.

15. Verfahren nach einem der Ansprüche 9 bis 14,
**dadurch gekennzeichnet, dass** die erfasste Heizkörpertemperatur und/oder die erfasste wandferne Raumlufttemperatur des Raums (2) und/oder die erfasste Wandtemperatur der Wand (4) des Raums (2) oder zumindest die wandnahe Raumlufttemperatur des Raums (2) im vorgegebenen Abstand zur Wand (4) des Raums (2) und/oder das erfasste zeitliche Raumtemperaturprofil und/oder der erfasste Feuchtemesswert mittels der Kommunikationseinheit (10) an die mindestens eine heizkostenverteilerexterne Einheit übertragen wird.

## Claims

1. Electronic heat cost allocator (1), comprising
- a first temperature sensor (TS1) for recording a heating element temperature of a heating element (3) arranged in a room (2),
- a second temperature sensor (TS2) for recording a wall temperature of a wall (4) of the room (2) or at least one near-wall room air temperature of the room (2) at a predefined distance from the wall (4) of the room (2), and
- a moisture sensor (FS),
**characterized in that**
- the first temperature sensor (TS1) is in the form of a remote sensor and is thermally couplable to the heating element (3) arranged in the room (2),
- the second temperature sensor (TS2) is arranged in the electronic heat cost allocator (1), and the electronic heat cost allocator (1) is designed in such a way that the second temperature sensor (TS2) is positionable or positioned on the wall (4) or at a predefined distance from the wall (4) as a result of an arrangement of the electronic heat cost allocator (1) on the wall (4) of the room (2), and
- the second temperature sensor (TS2) and the moisture sensor (FS) are arranged in and/or on a housing (5) of a base unit (6) of the electronic heat cost allocator (1).

2. Electronic heat cost allocator (1) according to Claim 1,
**characterized by** a third temperature sensor (TS3) for recording a wall-remote room air temperature of the room (2), which is arranged at a distance from the second temperature sensor (TS2), in particular is arranged at such a distance that it is positionable or positioned at a greater distance from the wall (4) than the second temperature sensor (TS2) as a result of the arrangement of the electronic heat cost allocator (1) on the wall (4) of the room (2).

3. Electronic heat cost allocator (1) according to either of the preceding claims,
**characterized in that** the second temperature sensor (TS2) is in the form of a heating element temperature sensor integrated in the electronic heat cost allocator (1), which is intended to record the heating element temperature when the electronic heat cost allocator (1) is arranged on the heating element (3) and the first temperature sensor (TS1) is not being used.

4. Electronic heat cost allocator (1) according to one of the preceding claims,
**characterized in that** the second temperature sensor (TS2) is arranged on a sensor circuit board (11) that is arranged at a predefined angle, in particular at right angles, to a motherboard (12) and is connected to the motherboard (12).

5. Electronic heat cost allocator (1) according to one of the preceding claims,
**characterized by** an evaluation unit (8).

6. Electronic heat cost allocator (1) according to one of the preceding claims,
**characterized by** a warning unit (9).

7. Electronic heat cost allocator (1) according to one of the preceding claims,
**characterized by** a communication unit (10) for communication with at least one heat-cost-allocator-external unit.

8. Electronic heat cost allocator (1) according to one of the preceding claims,
**characterized in that** the second temperature sensor (TS2) and the moisture sensor (FS) are in the form of a common sensor unit, wherein in particular the second temperature sensor (TS2) is integrated in the moisture sensor (FS).

9. Method for operating an electronic heat cost allocator (1) according to one of Claims 1 to 8 in a heat cost allocator function and/or in a risk-of-mould warning function,
- wherein the electronic heat cost allocator (1) is operated exclusively in the heat cost allocator function by using the first temperature sensor (TS1) or using the second temperature sensor (TS2) to record the heating element temperature of the heating element (3) and at least using the recorded heating element temperature to determine an amount of heat delivered by the heating element (3) or an equivalent value for the amount of heat delivered by the heating element (3),
- wherein the electronic heat cost allocator (1) is operated exclusively in the risk-of-mould warning function by using the first temperature sensor (TS 1) to record the heating element temperature of the heating element (3), using the second temperature sensor (TS2) to record the wall temperature of the wall (4) of the room (2) or at least the near-wall room air temperature of the room (2) at the predefined distance from the wall (4) of the room (2) and using the moisture sensor (FS) to record a moisture, in particular a humidity in the room (2), and using the recorded heating element temperature, the recorded wall temperature or near-wall room air temperature at the predefined distance from the wall (4) of the room (2) and the recorded moisture to determine a level of a risk of mould,
- wherein the electronic heat cost allocator (1) is operated in the heat cost allocator function and in the risk-of-mould warning function by using the first temperature sensor (TS1) to record the heating element temperature of the heating element (3), using the second temperature sensor (TS2) to record the wall temperature of the wall (4) of the room (2) or at least the near-wall room air temperature of the room (2) at the predefined distance from the wall (4) of the room (2) and using the moisture sensor (FS) to record the moisture, in particular the humidity in the room (2), and at least using the recorded heating element temperature to determine the amount of heat delivered by the heating element (3) or the equivalent value for the amount of heat delivered by the heating element (3) and using the recorded heating element temperature, the recorded wall temperature or near-wall room air temperature at the predefined distance from the wall (4) of the room (2) and the recorded moisture to determine the level of the risk of mould.

10. Method according to Claim 9,
**characterized in that** the electronic heat cost allocator (1) is operated exclusively in the heat cost allocator function and/or in the heat cost allocator function and in the risk-of-mould warning function by additionally using the third temperature sensor (TS3) to record the wall-remote room air temperature of the room (2) and using the recorded heating element temperature and the recorded wall-remote room air temperature to determine the amount of heat delivered by the heating element (3) or the equivalent value for the amount of heat delivered by the heating element (3).

11. Method according to Claim 9 or 10,
**characterized in that** a temporal room air temperature profile is determined by using the third temperature sensor (TS3) to record the wall-remote room air temperature of the room (2) over time.

12. Method according to one of Claims 9 to 11,
**characterized in that** the amount of heat delivered by the heating element (3) or the equivalent value for the amount of heat delivered by the heating element (3) and/or the level of the risk of mould and/or the temporal room temperature profile is/are determined by means of the evaluation unit (8) of the electronic heat cost allocator (1).

13. Method according to one of Claims 9 to 12,
**characterized in that** a warning message is generated if the determined level of the risk of mould exceeds a predefined limit value and/or if the temporal room temperature profile drops below or exceeds a predefined limit value.

14. Method according to Claim 13,
**characterized in that** the generated warning message is output by the warning unit (9) and/or is transmitted to the at least one heat-cost-allocator-external unit by means of the communication unit (10).

15. Method according to one of Claims 9 to 14,
**characterized in that** the recorded heating element temperature and/or the recorded wall-remote room air temperature of the room (2) and/or the recorded wall temperature of the wall (4) of the room (2) or at least the near-wall room air temperature of the room (2) at the predefined distance from the wall (4) of the room (2) and/or the recorded temporal room temperature profile and/or the recorded moisture measured value is transmitted to the at least one heat-cost-allocator-external unit by means of the communication unit (10).

## Revendications

1. Répartiteur électronique de frais de chauffage (1), comprenant
- un premier capteur de température (TS1) pour détecter une température de radiateur d'un radiateur (3) disposé dans une pièce (2),
- un deuxième capteur de température (TS2) pour détecter une température de mur d'un mur (4) de la pièce (2) ou du moins une température d'air ambiant près du mur de la pièce (2) à une distance prédéfinie du mur (4) de la pièce (2), et
- un capteur d'humidité (FS),
**caractérisé en ce que**
- le premier capteur de température (TS1) est réalisé en tant que sonde à distance et peut être couplé thermiquement au radiateur (3) disposé dans la pièce (2).
- le deuxième capteur de température (TS2) est disposé dans le répartiteur électronique de frais de chauffage (1), et le répartiteur électronique de frais de chauffage (1) est réalisé de telle sorte que le deuxième capteur de température (TS2) peut être ou est positionné en disposant le répartiteur électronique de frais de chauffage (1) sur le mur (4) de la pièce (2) sur le mur (4) ou à une distance prédéfinie du mur (4), et
- le deuxième capteur de température (TS2) et le capteur d'humidité (FS) sont disposés dans et/ou sur un boîtier (5) d'une unité de base (6) du répartiteur électronique de frais de chauffage (1).

2. Répartiteur électronique de frais de chauffage (1) selon la revendication 1, **caractérisé par** un troisième capteur de température (TS3) pour détecter une température d'air ambiant éloignée du mur de la pièce (2), qui est disposé à distance du deuxième capteur de température (TS2), en étant en particulier disposé à distance façon à pouvoir être positionné ou être positionné par la disposition du répartiteur électronique de frais de chauffage (1) sur le mur (4) de la pièce (2) à une plus grande distance du mur (4) que le deuxième capteur de température (TS2).

3. Répartiteur électronique de frais de chauffage (1) selon l'une quelconque des revendications précédentes, **caractérisé en ce que** le deuxième capteur de température (TS2) est réalisé en tant que capteur de température de radiateur intégré dans le répartiteur électronique de frais de chauffage (1) et qui est prévu pour détecter la température de radiateur dans le cas d'un répartiteur électronique de frais de chauffage (1) disposé sur le radiateur (3) et lorsque le premier capteur de température (TS1) n'est pas utilisé.

4. Répartiteur électronique de frais de chauffage (1) selon l'une quelconque des revendications précédentes, **caractérisé en ce que** le deuxième capteur de température (TS2) est disposé sur une carte de circuits imprimés de capteur (11) qui est disposée selon un angle prédéfini, en particulier perpendiculairement, par rapport à une carte de circuits imprimés principale (12) et qui est reliée à la carte de circuits imprimés principale (12).

5. Répartiteur électronique de frais de chauffage (1) selon l'une quelconque des revendications précédentes, **caractérisé par** une unité d'évaluation (8).

6. Répartiteur électronique de frais de chauffage (1) selon l'une quelconque des revendications précédentes, **caractérisé par** une unité d'avertissement (9).

7. Répartiteur électronique de frais de chauffage (1) selon l'une quelconque des revendications précédentes, **caractérisé par** une unité de communication (10) pour communiquer avec au moins une unité externe au répartiteur de frais de chauffage.

8. Répartiteur électronique de frais de chauffage (1) selon l'une quelconque des revendications précédentes, **caractérisé en ce que** le deuxième capteur de température (TS2) et le capteur d'humidité (FS) sont réalisés en tant qu'unité de capteur commune, dans lequel en particulier le deuxième capteur de température (TS2) est intégré dans le capteur d'humidité (FS).

9. Procédé permettant de faire fonctionner un répartiteur électronique de frais de chauffage (1) selon l'une quelconque des revendications 1 à 8 dans une fonction de répartition de frais de chauffage et/ou dans une fonction d'avertissement de risque de moisissure,
- dans lequel, pour faire fonctionner le répartiteur électronique de frais de chauffage (1) exclusivement dans la fonction de répartition de frais de chauffage, la température de radiateur du radiateur (3) est détectée au moyen du premier capteur de température (TS1) ou au moyen du deuxième capteur de température (TS2), et au moins au moyen de la température de radiateur détectée, une quantité de chaleur dégagée par le radiateur (3) ou une valeur équivalente pour la quantité de chaleur dégagée par le radiateur (3) est déterminée,
- dans lequel, pour faire fonctionner le répartiteur électronique de frais de chauffage (1) exclusivement dans la fonction d'avertissement de risque de moisissure, la température de radiateur du radiateur (3) est détectée au moyen du premier capteur de température (TS1), la température de mur du mur (4) de la pièce (2) ou du moins la température d'air ambiant près du mur de la pièce (2) à la distance prédéfinie du mur (4) de la pièce (2) est détectée au moyen du deuxième capteur de température (TS2), et une humidité, en particulier une humidité de l'air dans la pièce (2), est détectée au moyen du capteur d'humidité (FS), et un niveau d'un risque de moisissure est déterminé au moyen de la température de radiateur détectée, de la température de mur détectée ou de la température d'air ambiant près du mur à la distance prédéfinie du mur (4) de la pièce (2) et de l'humidité détectée,
- dans lequel, pour faire fonctionner le répartiteur électronique de frais de chauffage (1) exclusivement dans la fonction de répartition de frais de chauffage et dans la fonction d'avertissement de risque de moisissure, la température de radiateur du radiateur (3) est détectée au moyen du premier capteur de température (TS1), la température de mur du mur (4) de la pièce (2) ou du moins la température d'air ambiant près du mur de la pièce (2) à la distance prédéfinie du mur (4) de la pièce (2) est détectée au moyen du deuxième capteur de température (TS2), et l'humidité, en particulier l'humidité de l'air dans la pièce (2), est détectée au moyen du capteur d'humidité (FS), et au moins au moyen de la température de radiateur détectée, la quantité de chaleur dégagée par le radiateur (3) ou la valeur équivalente pour la quantité de chaleur dégagée par le radiateur (3) est déterminée, et le niveau du risque de moisissure est déterminé au moyen de la température de radiateur détectée, de la température de mur détectée ou de la température d'air ambiant près du mur à la distance prédéfinie du mur (4) de la pièce (2) et de l'humidité détectée.

10. Procédé selon la revendication 9, **caractérisé en ce que** pour faire fonctionner le répartiteur électronique de frais de chauffage (1) exclusivement dans la fonction de répartition de frais de chauffage et/ou dans la fonction de répartition de frais de chauffage et dans la fonction d'avertissement de risque de moisissure, en plus la température d'air ambiant loin du mur de la pièce (2) est détectée au moyen du troisième capteur de température (TS3), et au moyen de la température de radiateur détectée et de la température d'air ambiant loin du mur détectée, la quantité de chaleur dégagée par le radiateur (3) ou la valeur équivalente pour la quantité de chaleur dégagée par le radiateur (3) est déterminée.

11. Procédé selon la revendication 9 ou 10, **caractérisé en ce qu'**un profil de température d'air ambiant dans le temps est déterminé **en ce que** la température d'air ambiant loin du mur de la pièce (2) est détectée au cours du temps au moyen du troisième capteur de température (TS3).

12. Procédé selon l'une quelconque des revendications 9 à 11, **caractérisé en ce que** la quantité de chaleur dégagée par le radiateur (3) ou la valeur équivalente pour la quantité de chaleur dégagée par le radiateur (3) et/ou le niveau du risque de moisissure et/ou le profil de température d'air ambiant dans le temps sont déterminés au moyen de l'unité d'évaluation (8) du répartiteur électronique de frais de chauffage (1).

13. Procédé selon l'une quelconque des revendications 9 à 12, **caractérisé en ce qu'**un avertissement est généré si le niveau déterminé du risque de moisissure dépasse une valeur limite prédéfinie, et/ou si le profil de température d'air ambiant dans le temps soupasse ou dépasse une valeur limite prédéfinie.

14. Procédé selon la revendication 13, **caractérisé en ce que** l'avertissement généré est délivré par l'unité d'avertissement (9) et/ou est transmis au moyen de l'unité de communication (10) à ladite au moins une unité externe au répartiteur de frais de chauffage.

15. Procédé selon l'une quelconque des revendications 9 à 14, **caractérisé en ce que** la température de radiateur détectée et/ou la température d'air ambiant loin du mur détectée de la pièce (2), et/ou la température de mur détectée du mur (4) de la pièce (2), ou du moins la température d'air ambiant près du mur de la pièce (2) à la distance prédéfinie du mur (4) de la pièce (2), et/ou le profil de température d'air ambiant dans le temps détecté, et/ou la valeur de mesure d'humidité détectée sont transmis au moyen de l'unité de communication (10) à ladite au moins une unité externe au répartiteur de frais de chauffage.
